(19) Europäisches Patentamt
European Patent Office
Office européen des brevets

(11) **EP 4 160 869 A1**

(12) **EUROPEAN PATENT APPLICATION**
published in accordance with Art. 153(4) EPC

(43) Date of publication:
**05.04.2023 Bulletin 2023/14**

(21) Application number: **21813769.3**

(22) Date of filing: **28.05.2021**

(51) International Patent Classification (IPC):
*H02J 13/00* (2006.01)     *G06Q 50/10* (2012.01)
*H02J 7/00* (2006.01)      *B60L 58/16* (2019.01)
*B60L 53/30* (2019.01)     *B60L 53/68* (2019.01)
*B60L 53/80* (2019.01)

(52) Cooperative Patent Classification (CPC):
**B60L 53/30; B60L 53/68; B60L 53/80; B60L 58/16;
G06Q 50/10; H02J 7/00; H02J 13/00;** Y02E 60/10;
Y02T 10/70; Y02T 10/7072; Y02T 90/12;
Y02T 90/16; Y02T 90/167; Y04S 30/12

(86) International application number:
**PCT/JP2021/020572**

(87) International publication number:
**WO 2021/241764 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.05.2020 JP 2020094298**

(71) Applicant: **HONDA MOTOR CO., LTD.
Minato-ku
Tokyo 107-8556 (JP)**

(72) Inventors:
• **AGATSUMA, Shinya
  Wako-shi, Saitama 351-0193 (JP)**
• **FUTAMURA, Yuichi
  Wako-shi, Saitama 351-0193 (JP)**
• **SATO, Takao
  Wako-shi, Saitama 351-0193 (JP)**
• **FUJITA, Takahito
  Wako-shi, Saitama 351-0193 (JP)**
• **IWASA, Takashi
  Wako-shi, Saitama 351-0193 (JP)**

(74) Representative: **Herzog, Markus
Weickmann & Weickmann
Patent- und Rechtsanwälte PartmbB
Postfach 860 820
81635 München (DE)**

(54) **INFORMATION ACQUISITION DEVICE, INFORMATION PROCESSING SYSTEM, ESTIMATION DEVICE, INFORMATION ACQUISITION METHOD, ESTIMATION METHOD, CONTROL METHOD, PROGRAM, AND COMPUTER-READABLE RECORDING MEDIUM**

(57) An information acquisition device includes an attachment/detachment information acquisition unit configured to acquire, regarding a first terminal provided in a power storage device and a second terminal provided in an electrical power device and is configured to be attachable/detachable to/from the first terminal, a number of times of attachment/detachment between the first terminal and the second terminal. An estimation device includes an estimation unit configured to estimate, regarding a first terminal provided in a power storage device and a second terminal provided in an electrical power device and is configured to be attachable/detachable to/from the first terminal, a deterioration degree of at least one of the first terminal or the second terminal. A storing device configured to be capable of storing a plurality of power storage devices includes: a plurality of second terminals respectively corresponding to a plurality of first terminals provided in each of the plurality of the power storage devices, each of the plurality of the second terminals being configured to be attachable/detachable to/from a corresponding one of the plurality of the first terminals; a deterioration information acquisition unit configured to acquire deterioration information indicating a deterioration degree of each of the plurality of the second terminals; and a selection unit configured to select, based on the deterioration information acquired by the

**(Cont. next page)**

deterioration information acquisition unit, the power storage device to be provided to a user out of the plurality of the power storage devices.

*FIG.2*

## Description

BACKGROUND

### 1. TECHNICAL FIELD

The present invention relates to an information acquisition device, an information processing system, an estimation device, an information acquisition method, an estimation method, a control method, a program, and a computer-readable recording medium.

### 2. RELATED ART

A charging device that charges a portable battery and supplies the charged battery according to a user request is known. Patent Document 1 discloses that, when an anomaly of the charging device is detected, an operation rate of the charging device is adjusted. Patent Document 2 discloses that first, fully-charged batteries are lent out in order from a battery that has been fully charged earliest, and when there are no more fully-charged batteries, the remaining batteries are lent out in order from a battery in a state closest to the fully-charged state.

[Prior Art Documents]

[Patent Documents]

[Patent Document 1] Japanese Patent Application Publication No. 2018-160073
[Patent Document 2] Japanese Patent Application Publication No. H11-259709

GENERAL DISCLOSURE

A first aspect of the present invention provides an information acquisition device. The above-described information acquisition device includes, for example, an attachment/detachment information acquisition unit configured to acquire, regarding a first terminal provided in a power storage device and a second terminal provided in an electrical power device and is configured to be attachable/detachable to/from the first terminal, a number of times of attachment/detachment between the first terminal and the second terminal.

In the above-described information acquisition device, the electrical power device may include an accommodation portion including the second terminal and configured to accommodate the power storage device. The electrical power device may include a counting unit configured to count a number of times of accommodation of the power storage device in the accommodation portion. In the above-described information acquisition device, the attachment/detachment information acquisition unit may be configured to acquire the number of times of attachment/detachment based on the number of times of accommodation counted by the counting unit. In the above-described information acquisition device, the accommodation portion may be configured such that the power storage device is insertable/removable into/from the accommodation portion. In the above-described information acquisition device, the counting unit may include an insertion detection unit configured to detect that the power storage device has been inserted into the accommodation portion.

In the above-described information acquisition device, the electrical power device or a remote device configured to be communicable with the electrical power device may include a deterioration information acquisition unit configured to acquire deterioration information indicating a deterioration degree of the second terminal, based on the number of times of attachment/detachment acquired by the attachment/detachment information acquisition unit. In the above-described information acquisition device, the electrical power device or the remote device may include a repair/maintenance information acquisition unit configured to acquire, based on the deterioration information acquired by the deterioration information acquisition unit, repair/maintenance information including at least one of (i) information indicating an arrival of a repair/maintenance period of the second terminal or (ii) information indicating a repair/maintenance prediction period which is a period in which a repair/maintenance of the second terminal is predicted to be performed.

In the above-described information acquisition device, the electrical power device or the remote device may include a first output unit configured to output information to be utilized for a manufacturing plan or a distribution plan of the second terminal, based on at least one of (i) an arrival of the repair/maintenance period being indicated by the repair/maintenance information acquired by the repair/maintenance information acquisition unit or (ii) the repair/maintenance prediction period indicated by the repair/maintenance information acquired by the repair/maintenance information acquisition unit. In the above-described information acquisition device, the electrical power device or the remote device may include a second output unit configured to output information to be utilized for a maintenance plan or a repair/maintenance plan of the second terminal, based on at least one of (i) an arrival of the repair/maintenance period being indicated by the repair/maintenance information acquired by the repair/maintenance information acquisition unit or (ii) the repair/maintenance prediction period indicated by the repair/maintenance information acquired by the repair/maintenance information acquisition unit.

In the above-described information acquisition device, the electrical power device may be a storing device configured to be capable of storing a plurality of the power storage devices. The electrical power device may include a selection unit configured to select, based on the deterioration information acquired by the deterioration information acquisition unit, the power storage device to be provided to a user out of the plurality of the power storage devices. In the above-described information acquisition device, the electrical power device may include a plurality of the second terminals respectively corresponding to the plurality of the power storage devices. In the electrical power device, the deterioration information acquisition unit may be configured to acquire the deterioration information related to each of the plurality of the second terminals. In the above-described information acquisition device, the selection unit may be configured to select the power storage device to be provided to the user such that the power storage device corresponding to the second terminal having a smaller deterioration degree is provided to the user more preferentially than the power storage device corresponding to the second terminal having a larger deterioration degree.

In the above-described information acquisition device, the attachment/detachment information acquisition unit may be configured to acquire, regarding a third terminal provided in another electrical power device different from the electrical power device and is configured to be attachable/detachable to/from the first terminal and the first terminal, another number of times of attachment/detachment which is a number of times of attachment/detachment between the first terminal and the third terminal. In the above-described information acquisition device, the electrical power device, the another electrical power device, or a remote device configured to be communicable with the electrical power device or the another electrical power device may include a deterioration information acquisition unit configured to acquire deterioration information indicating a deterioration degree of the first terminal, based on the number of times of attachment/detachment and the another number of times of attachment/detachment acquired by the attachment/detachment information acquisition unit.

In the above-described information acquisition device, the power storage device may be attached/detached alternately between another electrical power device different from the electrical power device and the electrical power device. In the above-described information acquisition device, the electrical power device or the remote device configured to be communicable with the electrical power device may include a deterioration information acquisition unit configured to acquire deterioration information indicating a deterioration degree of the first terminal, based on a value obtained by doubling the number of times of attachment/detachment acquired by the attachment/detachment information acquisition unit.

A second aspect of the present invention provides an information processing system. The above-described information processing system includes, for example, the above-described information acquisition device according to the first aspect. The above-described information processing system includes, for example, the electrical power device or a remote device configured to be communicable with the electrical power device. The above-described information processing system includes, for example, an estimation unit configured to estimate a deterioration degree of the second terminal.

A third aspect of the present invention provides an estimation device. The above-described estimation device includes, for example, an estimation unit configured to estimate, regarding a first terminal provided in a power storage device and a second terminal provided in an electrical power device and is configured to be attachable/detachable to/from the first terminal, a deterioration degree of at least one of the first terminal or the second terminal.

In the above-described estimation device, the electrical power device may include an attachment/detachment information acquisition unit configured to acquire a number of times of attachment/detachment between the first terminal and the second terminal. In the above-described estimation device, the estimation unit may be configured to estimate the deterioration degree based on the number of times of attachment/detachment acquired by the attachment/detachment information acquisition unit. In the above-described estimation device, the electrical power device may include an accommodation portion including the second terminal and configured to accommodate the power storage device. The electrical power device may include a counting unit configured to count a number of times of accommodation of the power storage device in the accommodation portion. In the above-described estimation device, the attachment/detachment information acquisition unit may be configured to acquire the number of times of attachment/detachment based on the number of times of accommodation counted by the counting unit. In the above-described estimation device, the accommodation portion may be configured such that the power storage device is insertable/removable into/from the accommodation portion. In the above-described estimation device, the counting unit may include an insertion detection unit configured to detect that the power storage device has been inserted into the accommodation portion.

A fourth aspect of the present invention provides a storing device. The above-described storing device is configured to be capable of storing a plurality of power storage devices, for example. The above-described storing device includes, for example, a plurality of second terminals respectively corresponding to a plurality of first terminals provided in each of the plurality of the power storage devices, each of the plurality of the second terminals being configured to be attachable/detachable to/from a corresponding one of the plurality of the first terminals. The above-described storing device includes, for example, a deterioration information acquisition unit configured to acquire deterioration information indicating a deterioration degree of each of the plurality of the second terminals. The above-described storing device includes, for example, a selection unit configured to select, based on the deterioration information acquired by the deterioration information acquisition unit, the power storage device to be provided to a user out of the plurality of the power storage devices.

In the above-described storing device, the selection unit may be configured to select the power storage device to be provided to the user such that the power storage device corresponding to the second terminal having a smaller deterioration degree is provided to the user more preferentially than the power storage device corresponding to the second terminal having a larger deterioration degree. The above-described storing device may include an attachment/detachment information acquisition unit configured to acquire a number of times of attachment/detachment between each of the plurality of the second terminals and the corresponding one of the plurality of the first terminals. In the above-described storing device, the deterioration information acquisition unit may be configured to determine or estimate the deterioration degree of each of the plurality of the second terminals, based on the number of times of attachment/detachment acquired by the attachment/detachment information acquisition unit.

A fifth aspect of the present invention provides an information acquisition method. The above-described information acquisition method includes, for example, acquiring, regarding a first terminal provided in a power storage device and a second terminal provided in an electrical power device and is configured to be attachable/detachable to/from the first terminal, a number of times of attachment/detachment between the first terminal and the second terminal.

A sixth aspect of the present invention provides an estimation method. The above-described estimation method includes, for example, estimating, regarding a first terminal provided in a power storage device and a second terminal provided in an electrical power device and is configured to be attachable/detachable to/from the first terminal, a deterioration degree of at least one of the first terminal or the second terminal.

A seventh aspect of the present invention provides a control method for a storing device. In the above-described control method, the storing device includes, for example, a plurality of second terminals respectively corresponding to a plurality of first terminals provided in each of a plurality of power storage devices, each of the plurality of the second terminals being configured to be attachable/detachable to/from a corresponding one of the plurality of the first terminals. The above-described control method includes, for example, acquiring deterioration information indicating a deterioration degree of each of the plurality of the second terminals. The above-described control method includes, for example, selecting, based on the deterioration information acquired in the acquiring of the deterioration information, the power storage device to be provided to a user out of the plurality of the power storage devices.

An eighth aspect of the present invention provides a program. A computer-readable medium having recorded thereon the above-described program may also be provided. The computer-readable medium may be a non-transitory computer-readable medium or a computer-readable recording medium. The above-described program may be a program that causes a computer to function as the above-described information acquisition device according to the first aspect, the above-described estimation device according to the third aspect, or the above-described storing device according to the fourth aspect. The above-described program may be a program that causes a computer to execute the above-described information acquisition method according to the fifth aspect, the above-described estimation method according to the sixth aspect, or the above-described control method for a storing device according to the seventh aspect.

The summary clause does not necessarily describe all necessary features of the embodiments of the present invention. The present invention may also be a sub-combination of the features described above.

BRIEF DESCRIPTION OF THE DRAWINGS

Fig. 1 schematically shows an example of a system configuration of a battery management system 100.
Fig. 2 schematically shows an example of an internal configuration of a battery station 110.
Fig. 3 schematically shows an example of an internal configuration of a slot 112.
Fig. 4 schematically shows an example of an internal configuration of a state management unit 246.
Fig. 5 schematically shows an example of an internal configuration of a management server 120.
Fig. 6 schematically shows an example of an internal configuration of a station management unit 510.
Fig. 7 schematically shows an example of an internal configuration of a station management unit 710.
Fig. 8 schematically shows an example of information processing in the battery management system 100.
Fig. 9 schematically shows an example of a system configuration of a computer 3000.

DESCRIPTION OF EXEMPLARY EMBODIMENTS

Hereinafter, the invention will be described through embodiments of the invention, but the following embodiments do not limit the invention according to claims. In addition, not all of the combinations of features described in the embodiments are essential to the solving means of the invention. Note that in the drawings, the same or similar parts are denoted by the same reference numerals, and redundant description may be omitted.

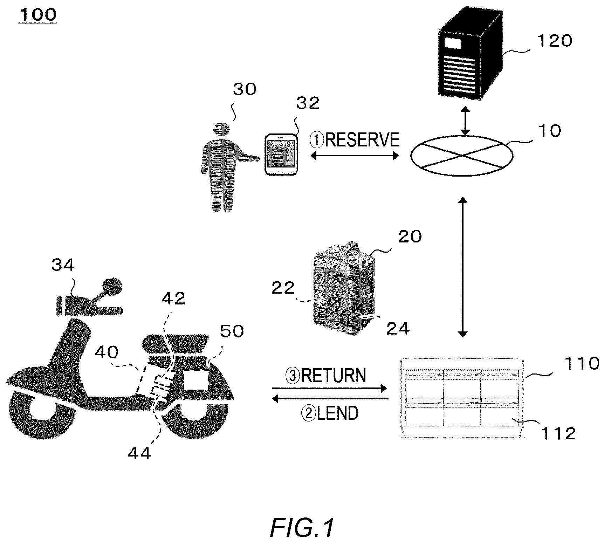

[Overview of battery management system 100] Fig. 1 schematically shows an example of a system configuration of a battery management system 100. In the present embodiment, a battery management system 100 will be described in detail while taking a case where the battery management system 100 manages one or a plurality of (may be referred to as one or more) batteries 20 as an example. More specifically, the battery management system 100 will be described in detail while taking a case where the battery management system 100 provides one or more batteries 20 to each of one or more users 30, as an example.

In the present embodiment, the battery management system 100 includes, for example, a battery station 110 and a management server 120. In the present embodiment, the battery station 110 includes one or more slots 112 for storing the batteries 20. In the present embodiment, the battery 20 includes a power connector 22 and a communication connector 24.

In the present embodiment, an example of the battery management system 100 will be described while taking a case where the battery 20 is used as a power supply of an electric motorbike 34 as an example. In the present embodiment, the electric motorbike 34 includes a slot 40 and a motorbike control unit 50. The slot 40 includes a power connector 42 and a communication connector 44.

In the present embodiment, the battery station 110 and the management server 120 can mutually transmit and receive information via a communication network 10, for example. In the present embodiment, the battery station 110 and the management server 120 can transmit and receive information to/from a communication terminal 32 of a user 30 via the communication network 10, for example.

According to the present embodiment, for example, the user 30 uses the communication terminal 32 to request the battery management system 100 to lend out the battery 20 stored in a particular battery station 110. More specifically, for example, the above-described request (may be referred to as a reservation request, lending request, or the like) is transmitted from the communication terminal 32 to the management server 120. Accordingly, the user 30 can reserve the use of the battery 20.

In response to the above-described reservation request, the management server 120 executes processing for lending out the above-described battery 20 to the user 30. For example, the management server 120 transmits, to the above-described particular battery station 110 designated by the reservation request, an instruction for causing the battery station 110 to execute supply processing of the designated number of batteries 20, that has been designated by the reservation request. Accordingly, the user 30 can take out the battery 20 stored in the battery station 110. The user 30 uses the battery 20 lent out from the battery management system 100 as the power supply of the electric motorbike 34, for example.

When a charging rate or SOC of the battery 20 mounted on the electric motorbike 34 becomes small, the user 30 returns the above-described battery 20 to an arbitrary battery station 110. More specifically, the user 30 removes the battery 20 from the electric motorbike 34 and inserts the removed battery 20 into the slot 112 of the battery station 110. When the user 30 is reserving the use of another battery 20 stored in the above-described battery station 110, the user 30 takes out the battery 20 from the above-described battery station 110 and mounts it on the electric motorbike 34. Accordingly, according to the present embodiment, lending and return of the battery 20 are repeated.

When the lending and return of the battery 20 are repeated, not only the battery 20 but also various components constituting the battery station 110 deteriorate. When the deterioration of components progresses, a possibility of an anomaly being caused in the battery station 110 increases.

Therefore, according to the battery management system 100 of the present embodiment, the deterioration of the components constituting the battery station 110 is managed. For example, the battery management system 100 manages deterioration of at least a part of one or more components constituting the battery station 110. Further, by managing the above-described deterioration of the components, the battery management system 100 can output (i) information to be utilized for a manufacturing plan or distribution plan of the components and (ii) information to be utilized for a maintenance plan of the battery station 110.

[Overview of each unit of battery management system 100] In the present embodiment, the communication network 10 is used to transmit information between the battery station 110 and the management server 120. Further, the communication network 10 is used to transmit information between the communication terminal 32 and the battery station 110 or management server 120.

The communication network 10 may be a transmission path for wired communication, may be a transmission path for wireless communication, or may be a combination of a transmission path for wireless communication and a transmission path for wired communication. For example, the communication network 10 includes at least one of a wireless packet communication network, the Internet, a PSP network, a dedicated line, VPN, a power line communication line, a vehicle-to-vehicle communication line, or a road-to-vehicle communication line. The communication network 10 may also include (i) a mobile communication network such as a mobile phone network, and may include (ii) a wireless communication network such as a wireless MAN (for example, WiMAX (registered trademark)), a wireless LAN (for example, WiFi (registered trademark)), Bluetooth (registered trademark), ZigBee (registered trademark), and NFC (Near Field Communication).

In the present embodiment, the battery 20 accumulates electric energy. Further, the battery 20 provides the electric energy accumulated in the battery 20 to external electrical equipment. For example, the battery 20 is a replacement-type or portable power storage device, and is mounted on the electric motorbike 34 while being attachable/detachable to/from the electric motorbike 34. The battery 20 mounted on the electric motorbike 34 supplies electrical power to the electric motorbike 34.

Further, the battery 20 removed from the electric motorbike 34 is accommodated in the slot 112 of the battery station 110. The battery 20 is charged by the battery station 110 while being accommodated in the slot 112.

More specifically, when the battery 20 is accommodated in the slot 112, the power connector 22 of the battery 20 and a connector (not shown) provided inside the slot 112 are electrically connected. Accordingly, the battery 20 and the battery station 110 are electrically connected. When the battery 20 and the battery station 110 are electrically connected, the battery station 110 charges the battery 20 at an appropriate period in preparation for the next use of the battery 20.

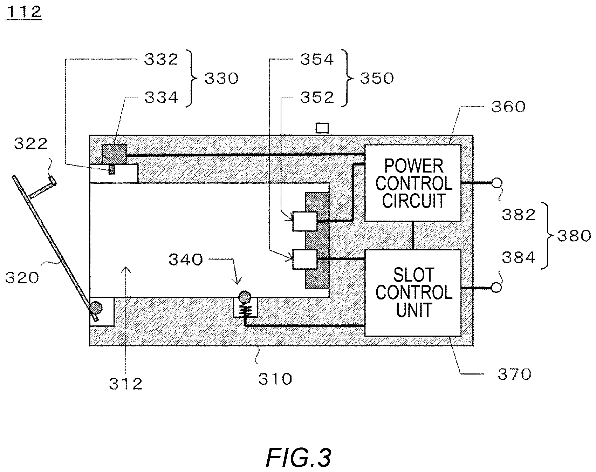

In the present embodiment, the power connector 22 is formed as a female connector. The connector provided inside the slot 112 (for example, power connector 352 described with reference to Fig. 3) is formed as a male connector. Accordingly, a damage of the power connector 22 can be suppressed.

The male connector is often arranged in the equipment such that it protrudes from a front surface of the equipment. Therefore, the male connector is generally weaker to an impact than the female connector. For example, when the battery 20 is a replacement-type or portable power storage device, there is a possibility that an external force will be applied to the battery 20 in a state where the battery 20 is taken out of the battery station 110 or the electric motorbike 34. Specifically, there is a possibility that the user will drop the battery 20 by mistake while conveying the battery 20, or the user will place the battery 20 on the ground with a surface of the battery 20 on which the power connector 22 is provided facing downward.

At this time, if the power connector 22 is arranged so as to protrude from a housing of the battery 20 as a male connector, there is a possibility that the power connector 22 will be damaged. On the other hand, since the power connector 352 of the slot 112 is protected by the slot 112, the possibility of external force being unexpectedly applied thereto is lower than the power connector 22. Therefore, in the present embodiment, the female connector is provided on the battery 20 side, and the male connector is provided on the slot 112 side.

Note that the power connector 22 is not limited to the female connector. In another embodiment, the power connector 22 is formed as the male connector, and the power connector 352 of the slot 112 is formed as the female connector. Even in this case, for example, the damage of the power connector 22 is suppressed by providing the battery 20 with a protection member that protects the power connector 22 or arranging the power connector 22 in a concave portion of the battery 20.

Note that the reference to "electrically connected" is not limited to direct connection between a particular component and another component. A third element having conductivity may be arranged between a particular element and another element. Also, the phrase "electrically connected" does not necessarily mean that a particular element and another element are physically connected. For example, input winding and output winding in a transformer are not physically connected but are electrically connected.

Further, according to the present embodiment, the communication connector 24 of the battery 20 and the communication connector 354 of the slot 112 are connected in a communicable manner. Accordingly, information can be transmitted and received between the battery 20 and the battery station 110. For example, when the battery 20 includes a storage device such as a memory, the battery station 110 can acquire information stored in the memory. Stored in the storage device of the battery 20 are, for example, a fluctuation history of a charging rate or SOC of the battery 20, a fluctuation history of a temperature of the battery 20, or the like. History information related to various items may be information in which information indicating a time and information indicating a state of the item at the time are associated with each other.

In the present embodiment, the communication connector 24 is formed as the female connector. The connector provided inside the slot 112 (for example, communication connector 354 described with reference to Fig. 3) is formed as the male connector. Accordingly, the damage of the communication connector 24 is suppressed. Note that the communication connector 24 is not limited to the female connector. In another embodiment, the communication connector 24 may be formed as the male connector, and the communication connector 354 of the slot 112 may be formed as the female connector.

In the present embodiment, the communication terminal 32 is used by the user 30. The communication terminal 32 functions as an interface between the battery management system 100 and the user 30, for example. The communication terminal 32 may function as an interface between the battery station 110 and the user 30, or may function as an interface between the management server 120 and the user 30.

In one embodiment, the communication terminal 32 accepts an input from the user 30. The communication terminal 32 transmits various requests to the management server 120 based on the input from the user 30. Examples of the above-described requests include a search request for searching for a battery station 110 that matches with specific conditions, a reservation request for reserving any batteries 20 or a specific battery 20 that are stored in a specific battery station 110, or the like.

In another embodiment, the communication terminal 32 presents information to the user 30. For example, the communication terminal 32 outputs, to the user 30, information received from the management server 120. Embodiments of outputting information are not particularly limited. The communication terminal 32 may output an image, or may output sound.

Details of the communication terminal 32 are not particularly limited as long as it is equipment capable of transmitting and receiving information to/from respective units of the battery management system 100 via the communication network 10. Examples of the communication terminal 32 may include a personal computer, a mobile terminal, and the like. Examples of the mobile terminal may include a mobile phone, a smartphone, a PDA, a tablet, a notebook computer or a laptop computer, a wearable computer, and the like.

In the present embodiment, the electric motorbike 34 operates by consuming electrical power supplied from the battery 20. More specifically, the electric motorbike 34 moves by using electrical power supplied from the battery 20. When the battery 20 includes the storage device, for example, the electric motorbike 34 stores at least one of a movement history or an operation history of the electric motorbike 34 in the above-described storage device.

The electric motorbike 34 is configured such that the battery 20 is attachable/detachable to/from the electric motorbike 34. The electric motorbike 34 may be configured such that a single battery 20 is mounted thereon, or may be configured such that a plurality of batteries 20 are mounted thereon.

In the present embodiment, the slot 40 accommodates the battery 20. To the extent that there is no technical contradiction, the slot 40 may have a configuration similar to that of the slot 112, the details of which will be described in relation to Fig. 3. The slot 40 may include functions different from those of the slot 112, or does not need to include a part of the functions of the slot 112.

In the present embodiment, the power connector 42 is electrically connected to the power connector 22 of the battery 20. In the present embodiment, the power connector 42 and the power connector 22 are connected by a wired connection. In the present embodiment, the power connector 42 is formed as a male connector. Accordingly, the damage of the power connector 22 can be suppressed.

Note that the power connector 42 is not limited to the male connector. In another embodiment, when the power connector 22 of the battery 20 is formed as the male connector, the power connector 42 may be formed as a female connector.

In the present embodiment, the communication connector 44 is connected to the communication connector 24 of the battery 20 in a communicable manner. In the present embodiment, the communication connector 44 and the power connector 22 are connected by a wired connection. In the present embodiment, the communication connector 44 is formed as a male connector. Accordingly, the damage of the communication connector 24 can be suppressed.

Note that the communication connector 44 is not limited to the male connector. In another embodiment, when the communication connector 24 of the battery 20 is formed as the male connector, the communication connector 44 may be formed as a female connector.

In the present embodiment, the motorbike control unit 50 controls various operations of the electric motorbike 34. The motorbike control unit 50 may control a driving unit (not shown) of the electric motorbike 34 to control the movement of the electric motorbike 34. The motorbike control unit 50 may control electrical power supply from the battery 20 to the electric motorbike 34. The motorbike control unit 50 may control insertion/removal or attachment/detachment of the battery 20.

For example, the motorbike control unit 50 determines or estimates the number of times of accommodation of the battery 20 in the slot 40. Based on the above-described number of times of accommodation, the motorbike control unit 50 determines or estimates the number of times of attachment/detachment between the power connector 22 and the power connector 42 or the number of times of attachment/detachment between the communication connector 24 and the communication connector 44. To the extent that there is no technical contradiction, the motorbike control unit 50 may have a configuration similar to that of a slot control unit 370, the details of which will be described in relation to Fig. 3. The motorbike control unit 50 may include functions different from those of the slot control unit 370, or does not need to include a part of the functions of the slot control unit 370.

In the present embodiment, the battery station 110 is configured to be capable of storing one or more batteries 20. More specifically, the battery station 110 includes one or more slots 112 that accommodate each of one or more batteries 20. Further, the battery station 110 charges each of the one or more batteries 20 stored in the battery station 110.

In the present embodiment, the battery station 110 controls lending of the battery 20. For example, the battery station 110 selects, out of the one or more batteries 20 stored in the battery station 110, a battery 20 to be provided to the user 30. More specifically, the battery station 110 selects the battery 20 to be provided to the user 30 based on a deterioration degree of the slot 112.

For example, the battery station 110 acquires, from the management server 120, information indicating priority of the one or more slots 112 provided in the battery station 110. The battery station 110 selects the battery 20 to be provided to the user 30 such that the battery 20 accommodated in the slot 112 of higher priority is preferentially provided to the user 30.

The priority of the respective slots is determined based on the deterioration degrees of the respective slots, for example. Examples of the information indicating the priority of the respective slots include (i) information indicating consecutive numerical values or stepwise segments that indicate the priority of the respective slots, (ii) information in which identification information of the respective slots and the information indicating consecutive numerical values or stepwise segments that indicate the priority of the respective slots are associated with each other, (iii) identification information of each of the one or more slots 112 for which the battery 20 is to be preferentially lent out, (iv) identification information of each of the one or more slots 112 for which lending of the battery 20 is to be suppressed, and the like.

In one embodiment, for example, the priority of the respective slots is determined such that the priority of the slot that has deteriorated more becomes lower. In this case, the battery 20 to be provided to the user 30 is selected such that, by the lending of the battery 20, an unbalanced state of the deterioration degrees among the slots is eliminated as compared to a state before performing the lending. Further, since deterioration rates of the one or more slots 112 provided in the battery station 110 become comparable, an administrator of the battery station 110 can subject a majority of the slots 112 provided in the battery station 110 to maintenance at once, or replace the whole battery station 110. As a result, maintenance costs of the battery station 110 is reduced.

In another embodiment, for example, the priority of the respective slots is determined such that the priority of the slot that has deteriorated more becomes higher. In this case, the deterioration rate of some of the slots 112 becomes higher than the deterioration rate of other slots. Accordingly, the administrator of the battery station 110 can suppress the number of slots 112 to be subjected to maintenance at once, or prevent a situation where the majority of the slots 112 provided in the battery station 110 become unusable at once from occurring.

In the present embodiment, the management server 120 manages one or more batteries 20. For example, the management server 120 manages a state of each of the one or more batteries 20. Examples of the state of the battery 20 include a lending state (for example, lendable, not lendable, being lent, or the like), an operational state (for example, during charging, during discharging, standby, or the like), a charged state (for example, current SOC), a storage state (for example, temperature, humidity, or the like), a deterioration state, and the like.

In the present embodiment, the management server 120 manages reservations of each of the one or more batteries 20. Accordingly, the management server 120 can manage lending of the battery 20 by the battery station 110.

For example, the management server 120 receives a reservation request of the battery 20 from the communication terminal 32 of the user 30. The management server 120 judges whether the battery 20 indicated by the reservation request can be lent out, and determines whether to accept the reservation. When the reservation of the user 30 is accepted, the management server 120 transmits, to the battery station 110 storing the above-described battery 20, various types of information related to the reservation of the above-described battery 20.

In one embodiment, when the battery station 110 provides to the user 30 the batteries 20 in the number reserved by the user 30, the management server 120 transmits information indicating a determination criterion (may be referred to as policy) for determining the battery 20 to be provided preferentially out of the plurality of batteries 20 stored in the battery station 110. The above-described policy is determined based on the deterioration degree of each slot provided in the battery station 110, for example. The information indicating the priority of each slot provided in the battery station 110 described above may be an example of the policy.

In another embodiment, the management server 120 transmits identification information of the slot 112 accommodating the battery 20 to be lent out. The slot 112 accommodating the battery 20 to be lent out is determined based on the deterioration degree of each slot provided in the battery station 110, for example.

In the present embodiment, the management server 120 manages maintenance of the battery station 110. In one embodiment, for example, the management server 120 generates a maintenance plan of the battery station 110. Further, the management server 120 manages progress of the maintenance plan of the battery station 110, for example.

In another embodiment, the management server 120 manages manufacturing or distribution of maintenance goods of the battery station 110. For example, the management server 120 generates a manufacturing plan or distribution plan of the maintenance goods. Further, the management server 120 manages progress of the manufacturing plan or distribution plan of the maintenance goods, for example. Examples of the maintenance goods include the battery station 110, the slots 112, constituent components of the slots 112, a fixture for maintenance, and the like.

[Specific configuration of each unit of the battery management system 100] Each unit of the battery management system 100 may be realized by hardware, software, or a combination of hardware and software. When at least some of the components of the battery management system 100 are realized by software, components realized by the software may be realized by launching a program that defines the operations related to the components in an information processing device with a general configuration.

The program may also be stored in a computer-readable medium such as a CD-ROM, a DVD-ROM, a memory, or a hard disk, or may also be stored in a storage device connected to a network. The program may be installed from a computer-readable medium or a storage device connected to a network to a computer that constitutes at least a part of the battery management system 100. Execution of the program may cause a computer to function as at least a part of each unit of the battery management system 100.

The program causing the computer to function as at least a part of each unit of the battery management system 100 may include modules that define the operations of each unit of the battery management system 100. These program or modules act on a data processing apparatus, an input apparatus, an output apparatus, storage device, and the like to cause the computer to function as each unit of the battery management system 100 and to perform the information processing method of each unit of the battery management system 100.

The information processing written in the program functions as a specific means realized by the cooperation of software related to the program and various hardware resources of the battery management system 100, by having the program read by the computer. The realization of the calculations or manipulations of information appropriate for the intended use of the computer of the present embodiment by the above-described specific means allows a battery management system 100 according to the intended use to be configured.

In one embodiment, the information processing method of each unit of the battery management system 100 may be an information acquisition method. The above-described information acquisition method includes, for example, acquiring, regarding a first terminal provided in a power storage device and a second terminal provided in an electrical power device and configured to be attachable/detachable to/from the first terminal, a number of times of attachment/detachment between the first terminal and the second terminal. The above-described information acquisition method includes acquiring the number of times of attachment/detachment between (i) the first terminal provided in the power storage device and (ii) the second terminal provided in the electrical power device and configured to be attachable/detachable to/from the first terminal.

In another embodiment, the information processing method of each unit of the battery management system 100 may be an estimation method. The above-described estimation method includes, for example, estimating, regarding a first terminal provided in a power storage device and a second terminal provided in an electrical power device and configured to be attachable/detachable to/from the first terminal, a deterioration degree of at least one of the first terminal or the second terminal. The above-described estimation method includes, for example, estimating the deterioration degree of at least one of (i) the first terminal provided in the power storage device or (ii) the second terminal provided in the electrical power device and configured to be attachable/detachable to/from the first terminal.

In another embodiment, the information processing method of each unit of the battery management system 100 may be a control method for a storing device. The above-described storing device includes, for example, a plurality of second terminals respectively corresponding to a plurality of first terminals provided in each of a plurality of power storage devices, each of the plurality of second terminals being configured to be attachable/detachable to/from a corresponding one of the plurality of first terminals. The above-described control method includes, for example, acquiring deterioration information indicating a deterioration degree of each of the plurality of second terminals. The above-described control method includes, for example, selecting, based on the deterioration information acquired in the acquiring of the deterioration information, the power storage device to be provided to a user out of the plurality of power storage devices. The selecting includes, for example, selecting, based on the deterioration degree indicated by the deterioration information acquired in the acquiring of the deterioration information, the power storage device to be provided to a user out of the plurality of power storage devices.

The battery 20 may be an example of the power storage device. The power connector 22 may be an example of the first terminal. The communication connector 24 may be an example of the first terminal. The electric motorbike 34 may be an example of the electrical power device. The connector of the electric motorbike 34 may be an example of the second terminal.

The battery management system 100 may be an example of the information acquisition device, the estimation device, or the storing device. The battery station 110 may be an example of the information acquisition device, the estimation device, or the storing device. The battery station 110 may be an example of the electrical power device. The battery station 110 may be an example of the attachment/detachment information acquisition unit or the deterioration information acquisition unit. The slot 112 may be an example of the information acquisition device, the estimation device, or the storing device. The slot 112 may be an example of the electrical power device. The slot 112 may be an example of the accommodation portion, the attachment/detachment information acquisition unit, or the deterioration information acquisition unit. The connector of the slot 112 may be an example of the second terminal. The management server 120 may be an example of the information acquisition device or the estimation device. The management server 120 may be an example of the remote device. The management server 120 may be an example of the attachment/detachment information acquisition unit or the deterioration information acquisition unit.

The maintenance plan of the battery station 110 may be an example of the maintenance plan or the repair/maintenance plan of the second terminal. The information indicating the policy may be an example of the deterioration information. The information indicating the priority of each slot may be an example of the deterioration information.

The electric motorbike 34 may be an example of another electrical power device. The power connector 42 may be an example of one of the second terminal or the third terminal. The power connector 352 may be an example of one of the second terminal or the third terminal. The communication connector 44 may be an example of one of the second terminal or the third terminal. The communication connector 354 may be an example of one of the second terminal or the third terminal.

[One example of another embodiment] Note that in the present embodiment, the battery management system 100 has been described in detail while taking the case where a form in which the battery management system 100 provides the battery 20 is lending, as an example. However, as long as the battery 20 is supplied from the battery station 110 to the user 30, the form of providing the battery 20 is not limited to lending. In another embodiment, a third person other than the administrator of the battery management system 100 may be a proprietor of the battery 20.

In the present embodiment, using, as an example, a case where the battery 20 is used as a power supply for the electric motorbike 34, the detail of the battery management system 100 has been described. However, applications of the battery 20 are not limited to the present embodiment. In another embodiment, the battery 20 may be used as a power supply for various types of electrical equipment. As long as the electrical equipment is equipment that operates by consuming electrical power supplied from the battery 20, a type or structure thereof is not limited in particular.

Other examples of the electrical equipment include a movable body that uses an electric motor as a power source, a stationary power storage device, and the like. Examples of the movable body include a vehicle, a marine vessel, a flight vehicle, or the like. Examples of the vehicle include an automobile, a motorcycle, a bicycle, a standing vehicle including a power unit, or the like. Examples of the automobile include an electric automobile, a fuel-cell automobile, a hybrid automobile, a compact commuter, an electric cart, or the like. Examples of the motorcycle include a motorbike, a motor tricycle, or the like. Examples of the marine vessel include a ship, a hovercraft, a water bike, a submarine, a submersible craft, an underwater scooter, or the like. Examples of the flight vehicle include an airplane, an air ship or a balloon, a hot-air balloon, a helicopter, a drone, or the like.

In the present embodiment, the battery management system 100 has been described in detail while taking, as an example, the case where the management server 120 transmits, to the battery station 110, information indicating the priority of each slot provided in the battery station 110 or identification information of the slot 112 accommodating the battery 20 to be lent out, and the battery station 110 selects the battery 20 to be provided to the user 30 based on the information received from the management server 120. However, the method of selecting the battery 20 to be provided to the user 30 is not limited to the present embodiment. In another embodiment, the battery station 110 may determine the priority of each slot provided in the battery station 110 and select the battery 20 to be provided to the user 30 based on the priority. Further in another embodiment, the battery station 110 may determine the slot 112 accommodating the battery 20 to be lent out so as to select the battery 20 to be provided to the user 30.

In the present embodiment, using, as an example, the case where the management server 120 manages one or more batteries 20 and one or more battery stations 110, the detail of the battery management system 100 has been described. However, the battery management system 100 is not limited to the present embodiment. In another embodiment, at least one of the one or more battery stations 110 may have at least some of functions of the above-described management server 120. For example, at least one of the one or more battery stations 110 may manage one or more batteries 20 and another battery station 110. In this case, the battery management system 100 may include the management server 120, or does not need to include the management server 120.

In the present embodiment, an example of the battery 20 has been described while taking the case where the battery 20 includes the power connector 22 and the communication connector 24 as an example. However, the battery 20 is not limited to the present embodiment. In another embodiment, the power connector 22 and the communication connector 24 may be formed integrally. For example, a power pin and a communication pin are provided inside the connector formed integrally. The power pin may be another example of the power connector 22. The communication pin may be another example of the communication connector 24.

In the present embodiment, an example of the electric motorbike 34 has been described while taking the case where the electric motorbike 34 includes the power connector 42 and the communication connector 44 as an example. However, the electric motorbike 34 is not limited to the present embodiment. In another embodiment, the power connector 42 and the communication connector 44 may be formed integrally. For example, a power pin and a communication pin are provided inside the connector formed integrally. The power pin may be another example of the power connector 42. The communication pin may be another example of the communication connector 44.

In the present embodiment, an example of the battery station 110 has been described while taking the case where the battery station 110 includes the power connector 352 and the communication connector 354 as an example. However, the electric motorbike 34 is not limited to the present embodiment. In another embodiment, the power connector 352 and the communication connector 354 may be formed integrally. For example, a power pin and a communication pin are provided inside the connector formed integrally. The power pin may be another example of the power connector 352. The communication pin may be another example of the communication connector 354.

In the present embodiment, the battery management system 100 has been described in detail while taking the case where the connection between the power connector 42 and the power connector 22 and the connection between the communication connector 44 and the communication connector 24 are wired connections, as an example. However, the battery management system 100 is not limited to the present embodiment. In another embodiment, either one of the connection between the power connector 42 and the power connector 22 or the connection between the communication connector 44 and the communication connector 24 may be a wireless connection.

In the present embodiment, the battery management system 100 has been described in detail while taking the case where the electric motorbike 34 uses electrical power output from the battery 20, as an example. However, the equipment that uses the electrical power output from the battery 20 is not limited to the electric motorbike 34. In another embodiment, the equipment that uses the electrical power output from the battery 20 may be a power storage device that accumulates electrical power or various load devices that consume electrical power. Further in another embodiment, the battery station 110 may use the electrical power output from the battery 20.

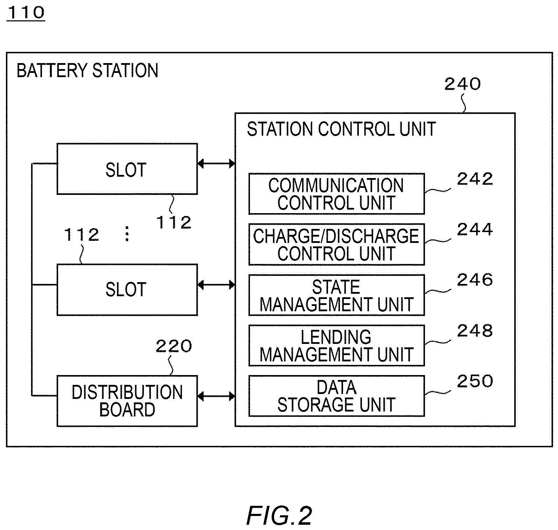

Fig. 2 schematically shows an example of an internal configuration of the battery station 110. In the present embodiment, the battery station 110 includes, for example, the plurality of slots 112, a distribution board 220, and a station control unit 240. In the present embodiment, the station control unit 240 includes a communication control unit 242, a charge/discharge control unit 244, a state management unit 246, a lending management unit 248, and a data storage unit 250.

In the present embodiment, the slot 112 accommodates the battery 20. The battery 20 is mounted inside the slot 112 by the user 30 and is taken out from the slot 112 by the user 30. For example, the slot 112 is configured such that the battery 20 is insertable/removable into/from the slot 112. In the present embodiment, the slot 112 counts the number of times of accommodation of the battery 20 in the slot 112 and outputs information indicating the number of times of accommodation to the station control unit 240. More specifically, the slot 112 detects that the battery 20 has been inserted into the slot 112. The slot 112 determines or estimates the above-described number of times of accommodation of the battery 20 based on the above-described result of detecting the insertion of the battery 20. The slot 112 will be described later in detail.

In the present embodiment, the distribution board 220 receives electrical power from an external power supply, a power generation device, or an electrical power system, and distributes the electrical power to each unit of the battery station 110. For example, the distribution board 220 is electrically connected to each of the plurality of slots 112 provided in the battery station 110. The distribution board 220 includes one or more power conditioning systems and supplies electrical power to each of the plurality of slots 112 according to an instruction from the station control unit 240. Examples of the power conditioning system include a one-way AC/DC circuit, a bidirectional AC/DC circuit, a one-way DC/DC circuit, a bidirectional DC/DC circuit, or the like.

In the present embodiment, the station control unit 240 controls the battery station 110. For example, the station control unit 240 controls operations of the battery station 110. Further, the station control unit 240 acquires outputs from various sensors provided in the battery station 110. Accordingly, the station control unit 240 can manage a state of the battery station 110.

In the present embodiment, the station control unit 240 cooperates with the management server 120 to control the battery station 110. The station control unit 240 will be described later in detail.

In the present embodiment, the communication control unit 242 controls communication between the station control unit 240 and the management server 120 or communication terminal 32. In one embodiment, the communication control unit 242 controls transmission and reception of information used in one of charge processing or lending processing of the battery 20, between the station control unit 240 and the management server 120. In another embodiment, the communication control unit 242 controls transmission and reception of information used in authentication processing of the user 30 who wishes to rent the battery 20, between the station control unit 240 and the communication terminal 32.

In the present embodiment, the charge/discharge control unit 244 controls charge and discharge of the one or more batteries 20 accommodated in the battery station 110. For example, the charge/discharge control unit 244 controls operations of the slot 112 accommodating the battery 20 to thus control charge and discharge of the battery 20.

For example, the charge/discharge control unit 244 generates a charging plan and controls charge and discharge of each of the one or more batteries 20 based on the charging plan. More specifically, the charge/discharge control unit 244 acquires information indicating a supply and demand situation of the battery 20 from the management server 120, and determines the number of batteries 20 that are lendable during a particular period based on the information. Examples of the information indicating the supply and demand situation of the battery 20 include information indicating a reservation status of the battery 20, information indicating a demand prediction of the battery 20, or the like. At a beginning of the particular period, for example, the charge/discharge control unit 244 charges the one or more batteries 20 accommodated in the battery station 110 so that the charging rate or SOC of at least the above-described number of batteries 20 becomes equal to or larger than a lendable value.

For example, depending on power supply performance of the distribution board 220, the number of batteries 20 that the battery station 110 can charge at the same time may be smaller than the number of batteries 20 that require charging. In this case, considering the power supply performance of the distribution board 220, the charge/discharge control unit 244 determines the slot 112 for which the battery 20 is to be charged out of the slots 112 accommodating the batteries 20. Further, when an electric utility rate fluctuates depending on a time of day, for example, considering the electric utility rate for each time of day, the charge/discharge control unit 244 determines the slot 112 for which the battery 20 is to be charged out of the slots 112 accommodating the batteries 20.

In such cases, for example, the charge/discharge control unit 244 acquires, from the management server 120, the information indicating the policy described above or the information indicating the priority of each slot, and determines the slot 112 to be used for charging the battery 20 based on the information. By determining the slot 112 to be used for charging the battery 20 based on the above-described policy or priority, a lending frequency of the battery 20 accommodated in a particular slot 112 may become higher than lending frequencies of the batteries 20 accommodated in other slots 112.

As described above, the above-described policy or priority is determined based on the deterioration degree of the slot 112. Accordingly, the charge/discharge control unit 244 can promote deterioration of a particular slot 112 more than the deterioration of other slots 112, or eliminate an unbalanced state of the deterioration degrees of the plurality of slots 112 provided in the battery station 110.

In the present embodiment, the state management unit 246 manages the state of each unit of the battery station 110. For example, the state management unit 246 manages the state of each of the plurality of slots 112 provided in the battery station 110. An example of the state of each slot is a usage state or deterioration state of each slot. Examples of the usage state or deterioration state of each slot include the number of times of accommodation of the battery 20 in each slot, the number of times of attachment/detachment between each slot and the battery 20, or the like. The state management unit 246 will be described later in detail.

In the present embodiment, the lending management unit 248 manages lending of the battery 20. Further, the lending management unit 248 manages return of the battery 20.

In one embodiment, for example, the lending management unit 248 determines the battery 20 to be lent out to the user 30 out of the batteries 20 accommodated in the slots 112 of the battery station 110. In the present embodiment, the battery 20 to be lent out to the user 30 is determined based on the deterioration degrees of the plurality of slots 112 provided in the battery station 110.

More specifically, the lending management unit 248 acquires, from the management server 120, information indicating the above-described policy or information indicating the priority of each slot, and determines the battery 20 to be lent out to the user 30 based on the information. For example, when the user 30 drives the electric motorbike 34 to move to an installed location of the battery station 110 and requests the battery station 110 to lend out the battery 20 that has been reserved in advance, the lending management unit 248 instructs the slot 112 of high priority, out of the one or more slots 112 accommodating the lendable batteries 20, to lend out the battery 20.

As described above, the above-described policy or priority is determined based on the deterioration degree of the slot 112. An example of the deterioration degree of the slot 112 is a deterioration degree of the connector that is provided inside the slot 112 and is connected with the power connector 22 or communication connector 24 of the battery 20. Accordingly, the lending management unit 248 can select the battery 20 to be provided to the user 30 out of the one or more batteries 20, based on the deterioration degrees of the slots 112.

In one embodiment, for example, when the priority is determined such that the priority becomes higher as the deterioration degree of the slot 112 becomes smaller, the lending management unit 248 selects the battery 20 to be provided to the user 30 such that the battery 20 accommodated in the slot 112 having a smaller deterioration degree is provided to the user 30 more preferentially than the battery 20 accommodated in the slot 112 having a larger deterioration degree. Accordingly, the unbalanced state of the deterioration degrees of the plurality of slots 112 provided in the battery station 110 can be eliminated.

In another embodiment, for example, when the priority is determined such that the priority becomes lower as the deterioration degree of the slot 112 becomes smaller, the lending management unit 248 selects the battery 20 to be provided to the user 30 such that the battery 20 accommodated in the slot 112 having a larger deterioration degree is provided to the user 30 more preferentially than the battery 20 accommodated in the slot 112 having a smaller deterioration degree. Accordingly, deterioration of a particular slot 112 can be promoted more than the deterioration of other slots 112.

In another embodiment, for example, the lending management unit 248 determines the slot 112 to accept return of the battery 20 out of the slots 112 not accommodating the batteries 20. In the present embodiment, the slot 112 to accept return of the battery 20 is determined based on the deterioration degrees of the plurality of slots 112 provided in the battery station 110.

More specifically, the lending management unit 248 acquires, from the management server 120, information indicating the policy described above or information indicating the priority of each slot, and determines the slot 112 to accept return of the battery 20 based on the information. For example, when the user 30 drives the electric motorbike 34 to move to the installed location of the battery station 110 and requests the battery station 110 to lend out the battery 20 that has been reserved in advance, the lending management unit 248 instructs the slot 112 of high priority out of the one or more slots 112 not accommodating the batteries 20, to execute processing for accepting the battery 20 to be returned.

As described above, the above-described policy or priority is determined based on the deterioration degree of the slot 112. Accordingly, the lending management unit 248 can select the slot 112 to be used for returning the battery 20 out of the one or more slots 112, based on the deterioration degrees of the slots 112.

In one embodiment, for example, when the priority is determined such that the priority becomes higher as the deterioration degree of the slot 112 becomes smaller, the lending management unit 248 selects the slot 112 to accept return of the battery 20 such that the slot 112 having a smaller deterioration degree accepts the battery 20 more preferentially than the slot 112 having a larger deterioration degree. Accordingly, the unbalanced state of the deterioration degrees of the plurality of slots 112 provided in the battery station 110 can be eliminated.

In another embodiment, for example, when the priority is determined such that the priority becomes lower as the deterioration degree of the slot 112 becomes smaller, the lending management unit 248 selects the slot 112 to accept return of the battery 20 such that the slot 112 having a larger deterioration degree accepts the battery 20 more preferentially than the slot 112 having a smaller deterioration degree. Accordingly, deterioration of a particular slot 112 can be promoted more than the deterioration of other slots 112.

In the present embodiment, the data storage unit 250 stores various types of information. In one embodiment, the data storage unit 250 stores information used for information processing carried out by the station control unit 240. For example, the data storage unit 250 stores information that the station control unit 240 has acquired from the management server 120 (for example, information indicating policy). In another embodiment, the data storage unit 250 stores information generated or acquired by the information processing in the station control unit 240. For example, the data storage unit 250 stores information that the station control unit 240 has acquired from the slot 112 (for example, number of times of insertion/removal or number of times of attachment/detachment of battery 20) and information that the station control unit 240 has acquired from the battery 20 (for example, charging rate or SOC of battery 20).

The station control unit 240 may be an example of the counting unit, the estimation unit, the attachment/detachment information acquisition unit, or the deterioration information acquisition unit. The state management unit 246 may be an example of the counting unit, the estimation unit, the attachment/detachment information acquisition unit, or the deterioration information acquisition unit. The lending management unit 248 may be an example of the deterioration information acquisition unit or the selection unit. The battery 20 to be lent out to the user 30 may be an example of the power storage device to be provided to the user.

Note that in the present embodiment, the lending management unit 248 has been described in detail while taking, as an example, the case where the lending management unit 248 acquires, from the management server 120, the information indicating the policy or the information indicating the priority of each slot, and determines the battery 20 to be lent out to the user 30 based on the information. However, the lending management unit 248 is not limited to the present embodiment. In another embodiment, the lending management unit 248 may determine the priority of each slot based on the deterioration degree of each slot, and determine the battery 20 to be lent out to the user 30 based on the priority.

In the present embodiment, the battery management system 100 has been described in detail while taking, as an example, the case of selecting the slot 112 to execute the lending processing at the time the user 30 arrives at the installed location of the battery station 110 and requests the battery station 110 to lend out the battery 20. However, the timing of selecting the slot 112 to execute the lending processing is not limited to the present embodiment. In another embodiment, the slot 112 to execute the lending processing may be selected when the management server 120 accepts a reservation request from the user 30 or while the management server 120 is processing the reservation request. The above-described selection processing may be executed by the management server 120, or may be executed by the station control unit 240.

In the present embodiment, the battery management system 100 has been described in detail while taking, as an example, the case of selecting the slot 112 to execute the return processing at the time the user 30 arrives at the installed location of the battery station 110 and requests the battery station 110 to lend out the battery 20. However, the timing of selecting the slot 112 to execute the return processing is not limited to the present embodiment. In another embodiment, the slot 112 to execute the return processing may be selected when the management server 120 accepts a reservation request from the user 30 or while the management server 120 is processing the reservation request. The above-described selection processing may be executed by the management server 120, or may be executed by the station control unit 240.

Fig. 3 schematically shows an example of an internal configuration of the slot 112. In the present embodiment, the slot 112 includes, for example, a housing 310, an opening/closing cover 320, a locking portion 330, a battery detection unit 340, a connector 350, a power control circuit 360, a slot control unit 370, and a connector 380. The slot 112 may also include a plurality of battery detection units 340.

In the present embodiment, a battery accommodation chamber 312 is formed inside the housing 310. In the present embodiment, the opening/closing cover 320 is provided with a lock member 322. In the present embodiment, the locking portion 330 includes a locking member 332 and a driving member 334. In the present embodiment, the connector 350 includes the power connector 352 and the communication connector 354. In the present embodiment, the connector 380 includes a power connector 382 and a communication connector 384.

In the present embodiment, the housing 310 is configured to be attachable/detachable to/from a body of the battery station 110. Accordingly, when a failure occurs in a part of the slot 112, the whole slot 112 can be replaced. By enabling the whole slot 112 to be replaced, a degree of freedom in maintenance is improved. For example, regarding a case of replacing a component in which a failure has occurred, a case of replacing the whole slot 112, and a case of replacing the whole battery station 110, the battery management system 100 or the administrator of the battery management system 100 can compare maintenance costs considering maintenance labor costs, construction costs, lost profits during a maintenance period, or the like, to thus determine a maintenance plan.

In the present embodiment, the battery accommodation chamber 312 is provided inside the housing 310 and accommodates the battery 20. The battery accommodation chamber 312 is configured such that the battery 20 is insertable/removable into/from the battery accommodation chamber 312. For example, an opening is formed on one side surface of the battery accommodation chamber 312 so as to enable the battery 20 to move in and out of the battery accommodation chamber 312.

In the present embodiment, the opening/closing cover 320 is provided so as to cover the opening of the battery accommodation chamber 312. The opening/closing cover 320 is configured to be capable of opening/closing the above-described opening. Accordingly, a switch is made between a state where insertion/removal of the battery 20 by the user 30 is permitted and a state where the insertion/removal of the battery 20 by the user 30 is prohibited. In the present embodiment, the opening/closing cover 320 is provided with the lock member 322 that is used to lock the opening/closing cover 320.

In the present embodiment, the locking portion 330 locks and unlocks the opening/closing cover 320. Accordingly, a switch is made between a state where opening/closing of the opening/closing cover 320 by the user 30 is permitted and a state where the opening/closing of the opening/closing cover 320 by the user 30 is prohibited.

In the present embodiment, the locking member 332 cooperates with the lock member 322 to control opening/closing of the opening/closing cover 320. For example, when the locking member 332 moves to a locking position in a state where the opening/closing cover 320 is closed, the movement of the lock member 322 is restricted, and thus the user 30 cannot open the opening/closing cover 320. On the other hand, when the locking member 332 moves to an unlocking position, the movement of the lock member 322 is not restricted, and thus the user 30 can open the opening/closing cover 320. In the present embodiment, the driving member 334 causes the locking member 332 to move between the locking position and the unlocking position. The driving member 334 causes the locking member 332 to move according to an instruction from the slot control unit 370, for example.

In the present embodiment, the battery detection unit 340 counts the number of times of accommodation of the battery 20 in the battery accommodation chamber 312. More specifically, the battery detection unit 340 detects that the battery 20 has been inserted into the battery accommodation chamber 312. The battery detection unit 340 outputs information indicating the detection result to the slot control unit 370.

A detection principle of the battery 20 by the battery detection unit 340 is not limited in particular. The battery detection unit 340 may detect the insertion of the battery 20 by a contact type sensor, or may detect the insertion of the battery 20 by a non-contact sensor.

In the present embodiment, the connector 350 is connected to the power connector 22 and communication connector 24 of the battery 20. The connector 350 is configured to be attachable/detachable to/from the power connector 22 and communication connector 24 of the battery 20.

In the present embodiment, the power connector 352 is electrically connected to the power connector 22 of the battery 20. In the present embodiment, the power connector 352 and the power connector 22 are connected by a wired connection. The power connector 352 is electrically connected to the power control circuit 360, and the power connector 352 is electrically connected to the power connector 22, with the result that the power control circuit 360 and the battery 20 are electrically connected. Accordingly, charge and discharge of the battery 20 become possible.

In the present embodiment, the communication connector 354 is connected to the communication connector 24 of the battery 20 in a communicable manner. In the present embodiment, the communication connector 354 and the communication connector 24 are connected by a wired connection. The communication connector 354 is connected to the slot control unit 370 in a communicable manner, and the communication connector 354 is connected to the communication connector 24 in a communicable manner, with the result that the slot control unit 370 and the battery 20 are connected in a communicable manner. Accordingly, information can be transmitted and received between the slot control unit 370 and the battery 20.

In the present embodiment, the power control circuit 360 receives electrical power supplied from the distribution board 220 of the battery station 110. Further, the power control circuit 360 supplies electrical power to each unit of the slot 112. The power control circuit 360 supplies electrical power to each unit of the slot 112 according to an instruction from the slot control unit 370, for example.

In the present embodiment, the slot control unit 370 controls operations of each unit of the slot 112. For example, the slot control unit 370 controls operations of the power control circuit 360 to adjust electrical power supplied from the power control circuit 360 to each unit of the slot 112, thereby controlling the operations of each unit of the slot 112.

More specifically, the slot control unit 370 controls the power control circuit 360 based on an instruction from the charge/discharge control unit 244, to thus control charge and discharge of the battery 20. Further, the slot control unit 370 controls the power control circuit 360 based on an instruction from the lending management unit 248, to thus control locking or unlocking of the locking portion 330.

In the present embodiment, the slot control unit 370 manages the state of each unit of the slot 112. For example, the slot control unit 370 acquires information indicating the state of each unit of the slot 112. Further, the slot control unit 370 transmits the information indicating the state of each unit of the slot 112 to the state management unit 246.

In one embodiment, the slot control unit 370 acquires information indicating a detection result of the battery 20 from the battery detection unit 340. The slot control unit 370 counts the number of insertion detection times of the battery 20. The slot control unit 370 determines or estimates the number of times of accommodation of the battery 20 in the battery accommodation chamber 312 based on the number of insertion detection times of the battery 20. Specifically, the slot control unit 370 assumes the number of insertion detection times of the battery 20 as the number of times of accommodation of the battery 20 in the battery accommodation chamber 312, to determine or estimate the number of times of accommodation.

Further, the slot control unit 370 determines or estimates, based on the above-described number of times of accommodation, the number of times of attachment/detachment between the power connector 22 and the power connector 352 or the number of times of attachment/detachment between the communication connector 24 and the communication connector 354. Accordingly, the slot control unit 370 can acquire information indicating the number of times of attachment/detachment between the connector of the battery 20 and the connector of the slot 112.

In one embodiment, the slot control unit 370 acquires, regarding the power connector 22 and the power connector 352, the number of times of attachment/detachment between the power connector 22 and the power connector 352. The number of times of attachment/detachment between the power connector 22 and the power connector 352 regarding the power connector 22 and the power connector 352 may simply be referred to as the number of times of attachment/detachment between the power connector 22 and the power connector 352. It may be referred to as the number of times of attachment/detachment between the power connector 22 and the power connector 352 regarding the power connector 22, the number of times of attachment/detachment between the power connector 22 and the power connector 352 regarding the power connector 352, the number of times of attachment/detachment in the power connector 22, the number of times of attachment/detachment in the power connector 352, or the like.

In another embodiment, the slot control unit 370 acquires, regarding the communication connector 24 and the communication connector 354, the number of times of attachment/detachment between the communication connector 24 and the communication connector 354. The number of times of attachment/detachment between the communication connector 24 and the communication connector 354 regarding the communication connector 24 and the communication connector 354 may simply be referred to as the number of times of attachment/detachment between the communication connector 24 and the communication connector 354, the number of times of attachment/detachment between the communication connector 24 and the communication connector 354 regarding the communication connector 24, the number of times of attachment/detachment between the communication connector 24 and the communication connector 354 regarding the communication connector 354, the number of times of attachment/detachment in the communication connector 24, the number of times of attachment/detachment in the communication connector 354, or the like.

In another embodiment, the slot control unit 370 acquires information indicating an opening/closing state of the opening/closing cover 320. Further, the slot control unit 370 acquires information indicating a locking state of the opening/closing cover 320 by the locking portion 330. Further in another embodiment, the slot control unit 370 acquires information indicating the charging rate or SOC of the battery 20. When the battery 20 includes a storage device, the slot control unit 370 may read various types of information stored in the storage device of the battery 20.

In the present embodiment, the connector 380 connects the body of the battery station 110 and the slot 112. The connector 380 is configured to be attachable/detachable to/from a connector (not shown) provided in the body of the battery station 110. In the present embodiment, the power connector 382 is electrically connected to the distribution board 220. Further, the communication connector 384 is connected to the station control unit 240 in a communicable manner.

The battery accommodation chamber 312 may be an example of the accommodation portion. The battery detection unit 340 may be an example of the counting unit or the insertion detection unit. The connector 350 may be an example of the second terminal. The power connector 352 may be an example of the second terminal. The communication connector 354 may be an example of the second terminal. The slot control unit 370 may be an example of the counting unit, the attachment/detachment information acquisition unit, the deterioration information acquisition unit, or the information acquisition device. The power connector 22 and communication connector 24 of the battery 20 inserted into or accommodated in the battery accommodation chamber 312 may be an example of the corresponding first terminal. The information indicating the detection result of the battery 20 may be an example of the attachment/detachment information. The processing of acquiring the information indicating the number of times of attachment/detachment may be an example of the processing of acquiring the number of times of attachment/detachment.

Note that in the present embodiment, the slot control unit 370 has been described in detail while taking the case where the slot control unit 370 determines or estimates the number of times of attachment/detachment of the battery 20 based on the number of times of insertion or number of times of accommodation of the battery 20, as an example. However, the slot control unit 370 is not limited to the present embodiment. In another embodiment, the slot control unit 370 may determine the number of times of attachment/detachment of the battery 20 based on an output from an appropriate sensor that actually detects the insertion/removal of the connector of the battery 20 and the connector 350 of the slot 112.

[One example of another embodiment] In the present embodiment, the battery management system 100 has been described in detail while taking the case where the connection between the power connector 352 and the power connector 22 and the connection between the communication connector 354 and the communication connector 24 are wired connections, as an example. However, the battery management system 100 is not limited to the present embodiment. In another embodiment, either one of the connection between the power connector 352 and the power connector 22 or the connection between the communication connector 354 and the communication connector 24 may be a wireless connection.

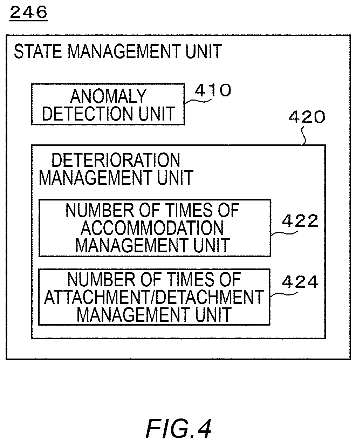

Fig. 4 schematically shows an example of an internal configuration of the state management unit 246. In the present embodiment, the state management unit 246 includes, for example, an anomaly detection unit 410 and a deterioration management unit 420. In the present embodiment, the deterioration management unit 420 includes a number of times of accommodation management unit 422 and a number of times of attachment/detachment management unit 424.

In the present embodiment, the anomaly detection unit 410 detects an anomaly caused in each unit of the battery station 110. The anomaly detection unit 410 transmits information indicating a content of the above-described anomaly to the management server 120.

In the present embodiment, the deterioration management unit 420 manages a deterioration state of each unit of the battery station 110. The deterioration management unit 420 transmits information indicating the deterioration state of each unit of the battery station 110 to the management server 120. For example, the deterioration management unit 420 acquires information indicating a deterioration degree of the connector 350 or a part thereof, for each of the plurality of slots 112 provided in the battery station 110. Further, the deterioration management unit 420 transmits, to the management server 120, identification information of each of the plurality of slots 112 and the above-described information indicating the deterioration degree related to the slot in association with each other.

In the present embodiment, the number of times of accommodation management unit 422 acquires, from the slot control unit 370 of each of the plurality of slots 112 provided in the battery station 110, information indicating the number of times of accommodation of the battery 20 in the battery accommodation chamber 312 of each slot. In the present embodiment, the number of times of attachment/detachment management unit 424 acquires, from the slot control unit 370 of each of the plurality of slots 112 provided in the battery station 110, information indicating the number of times of attachment/detachment between the connector of the battery 20 and the connector of the slot 112 in each slot.

In one embodiment, the number of times of attachment/detachment management unit 424 acquires, regarding the power connector 22 and the power connector 352, the number of times of attachment/detachment between the power connector 22 and the power connector 352. In another embodiment, the number of times of attachment/detachment management unit 424 acquires, regarding the communication connector 24 and the communication connector 354, the number of times of attachment/detachment between the communication connector 24 and the communication connector 354.

The deterioration management unit 420 may be an example of the deterioration information acquisition unit. The number of times of accommodation management unit 422 may be an example of the counting unit or the deterioration information acquisition unit. The number of times of attachment/detachment management unit 424 may be an example of the counting unit or the attachment/detachment information acquisition unit. The information indicating the deterioration state of each unit of the battery station 110 may be an example of the deterioration information. The information indicating the number of times of accommodation of the battery 20 in the battery accommodation chamber 312 may be an example of the deterioration information. The information indicating the number of times of attachment/detachment between the connector of the battery 20 and the connector of the slot 112 may be an example of the deterioration information.

Note that in the present embodiment, the number of times of accommodation management unit 422 has been described in detail while taking the case where the number of times of accommodation management unit 422 acquires, from the slot control unit 370 of each slot, information indicating the number of times of accommodation of the battery 20 in the battery accommodation chamber 312 of each slot, as an example. However, the number of times of accommodation management unit 422 is not limited to the present embodiment. In another embodiment, the number of times of accommodation management unit 422 acquires, from the slot control unit 370 of each of the plurality of slots 112, information indicating the detection result of the battery 20 obtained by the battery detection unit 340 provided in each slot. The number of times of accommodation management unit 422 may determine or estimate the number of times of accommodation of the battery 20 in the battery accommodation chamber 312 based on the number of insertion detection times of the battery 20, by procedures similar to those of the slot control unit 370. Accordingly, the number of times of accommodation management unit 422 can acquire the information indicating the number of times of accommodation of the battery 20 in the battery accommodation chamber 312 of each slot.

In the present embodiment, the number of times of attachment/detachment management unit 424 has been described in detail while taking the case where the number of times of attachment/detachment management unit 424 acquires, from the slot control unit 370 of each slot, the information indicating the number of times of attachment/detachment between the connector of the battery 20 and the connector of the slot 112 in each slot, as an example. However, the number of times of attachment/detachment management unit 424 is not limited to the present embodiment. In another embodiment, the number of times of attachment/detachment management unit 424 acquires, from the slot control unit 370 of each of the plurality of slots 112, information indicating a detection result of the battery 20 obtained by the battery detection unit 340 provided in each slot or information indicating the number of times of accommodation of the battery 20 in the battery accommodation chamber 312 of each slot. The number of times of attachment/detachment management unit 424 may determine or estimate the number of times of attachment/detachment between the connector of the battery 20 and the connector of the slot 112 in each slot, by procedures similar to those of the slot control unit 370. Accordingly, the number of times of attachment/detachment management unit 424 can acquire information indicating the number of times of attachment/detachment between the connector of the battery 20 and the connector of the slot 112 in each slot.

[One example of another embodiment] In the present embodiment, an example of the battery management system 100 or the battery station 110 has been described while taking the case where the deterioration management unit 420 manages the deterioration state of each unit of the battery station 110, as an example. However, the battery management system 100 and the battery station 110 are not limited to the present embodiment.

In another embodiment, the deterioration management unit 420 manages the deterioration state of at least one of the power connector 22 or the communication connector 24 provided in each of the one or more batteries 20. For example, the number of times of attachment/detachment management unit 424 of the deterioration management unit 420 manages a total number of times of attachment/detachment of the power connector 22 of each of the one or more batteries 20 during a particular period, as a double of the number of times of attachment/detachment between the power connector 22 described above and the power connector 352 during the particular period. Similarly, the number of times of attachment/detachment management unit 424 manages a total number of times of attachment/detachment of the communication connector 24 of each of the one or more batteries 20 during a particular period, as a double of the number of times of attachment/detachment between the communication connector 24 and the communication connector 354 during the particular period.

The above-described particular period may be a period between supply and return of the battery 20 (may be referred to as one lending period), or may be a period in which a particular time point is set as an origin. Examples of the particular time point include a usage start time point of each connector, a time point at which the battery 20 has been supplied last, a time point at which the battery 20 has been mounted on electrical power utility equipment, and the like. The number of times of attachment/detachment management unit 424 may transmit, to the management server 120, information indicating the number of times of attachment/detachment of each connector at a time point the battery 20 is mounted on the battery station 110, in association with identification information of each battery or identification information of each connector.

As described above, each of the one or more batteries 20 are attached/detached alternately between the battery station 110 and the electric motorbike 34. Specifically, the battery 20 supplied from the battery station 110 is mounted on the electric motorbike 34. Further, the battery 20 taken out from the electric motorbike 34 is returned to the battery station 110.

In this case, as long as there are no special circumstances, during one lending period of a particular battery 20, for example, the power connector 22 of the particular battery 20 experiences attachment/detachment to/from the power connector 352 of a particular battery station 110 and attachment/detachment to/from the power connector of a particular electric motorbike 34. Therefore, by the deterioration management unit 420 managing the total number of times of attachment/detachment of the power connector 22 of each of the one or more batteries 20 during a particular period as a double of the number of times of attachment/detachment between the power connector 22 and the power connector 352 described above, the deterioration management unit 420 can manage the deterioration state of the one or more power connectors 22. The same holds true for the deterioration state of the communication connector 24.

Note that the method used for the deterioration management unit 420 to manage the total number of times of attachment/detachment of the connector of each of the one or more batteries 20 is not limited to the method described above. The deterioration management unit 420 may derive the total number of times of attachment/detachment of the connector of each of the one or more batteries 20 by other procedures, to manage the total number of times of attachment/detachment.

For example, first, when the battery 20 is electrically connected to the electric motorbike 34, a computer provided in the battery 20 stores information indicating the number of times of attachment/detachment of the power connector 22 and/or communication connector 24 of the battery 20 in the storage device provided in the battery 20. Note that when the insertion/removal of the battery 20 is detected on the electric motorbike 34 side, a computer provided in the electric motorbike 34 (for example, motorbike control unit 50) may write the information indicating the number of times of attachment/detachment of the power connector 22 and/or communication connector 24 of the battery 20 in the storage device provided in the battery 20.

Examples of the information indicating the number of times of attachment/detachment of the power connector 22 and/or communication connector 24 of the battery 20 include information indicating an accumulated value of the number of times of attachment/detachment during a period in which a particular time point is set as an origin, or the like. Examples of the particular time point include a usage start time point of each connector, a time point at which the battery 20 has been supplied last, a time point at which the battery 20 is mounted on the electric motorbike 34, or the like.

The computer provided in the battery 20 may detect an electrical connection between the battery 20 and the electric motorbike 34 based on an output of an insertion/removal sensor, a current sensor, a voltage sensor, and/or a power sensor provided in the battery 20. The insertion/removal sensor may be a contact type physical sensor, or may be a non-contact optical sensor. For example, the battery 20 includes an optical sensor that emits light beams toward outside of the battery 20. For example, the battery 20 includes a physical sensor in the vicinity of the power connector 22 or the communication connector 24. The battery 20 may include a physical sensor similar to the battery detection unit 340.

The computer provided in the battery 20 may detect the electrical connection between the battery 20 and the electric motorbike 34 based on the output of the insertion/removal sensor, the current sensor, the voltage sensor, and/or the power sensor provided in the electric motorbike 34. The insertion/removal sensor may be a contact type physical sensor, or may be a non-contact optical sensor. The electric motorbike 34 may include a physical sensor similar to the battery detection unit 340.

For example, the motorbike control unit 50 electrically connects the battery 20 and the electric motorbike 34 based on the output of the insertion/removal sensor, the current sensor, the voltage sensor, and/or the power sensor provided in the electric motorbike 34. The computer provided in the battery 20 receives information indicating that the battery 20 and the electric motorbike 34 have been electrically connected, from the motorbike control unit 50. Accordingly, the computer provided in the battery 20 can detect the electrical connection between the battery 20 and the electric motorbike 34.

Next, the battery 20 is taken out from the electric motorbike 34 to be returned to any battery station 110. When the battery 20 is returned to the battery station 110, the number of times of attachment/detachment management unit 424 of the battery station 110 accesses the storage device provided in the battery 20 to acquire information indicating the above-described number of times of attachment/detachment of the power connector 22 and/or communication connector 24 of the battery 20 during a particular period.

In this case, a history of attachment/detachment between at least one of the power connector 22 or communication connector 24 of a particular battery 20 (at least one of power connector or communication connector may be referred to as each connector) and each connector of a particular electric motorbike 34 on which the particular battery 20 is mounted, is recorded in the storage device of the particular battery 20. Therefore, the processing of estimating the total number of times of attachment/detachment of the above-described particular battery 20 during one lending period does not need to be executed.

The number of times of attachment/detachment management unit 424 adds one to the number of times of attachment/detachment of each connector indicated by the information acquired from the storage device of the battery 20, to derive the number of times of attachment/detachment of each connector at the time point the battery 20 is mounted on the battery station 110. The number of times of attachment/detachment management unit 424 may transmit, to the management server 120, the information indicating the number of times of attachment/detachment of each connector at the time point the battery 20 is mounted on the battery station 110, in association with identification information of each battery or identification information of each connector.

Note that the number of times of attachment/detachment management unit 424 may transfer the information acquired from the storage device provided in the battery 20, to the management server 120. In this case, the number of times of attachment/detachment management unit 424 does not need to execute the processing for deriving the number of times of attachment/detachment of each connector of the battery 20.

Further in another embodiment, the deterioration management unit 420 manages the deterioration state of at least one of the power connector 42 or the communication connector 44 provided in each of the one or more electric motorbikes 34. For example, for each of the one or more batteries 20, the number of times of attachment/detachment management unit 424 of the deterioration management unit 420 acquires, during a period from after each battery is supplied from any one of the one or more battery stations 110 to before being returned to any one of the one or more battery stations 110, the identification information of the electric motorbikes 34 on which the respective batteries are mounted, to thus manage the number of times of attachment/detachment of each connector of the electric motorbike 34 identified by the acquired identification information.

For example, first, when the battery 20 is mounted on the electric motorbike 34, the computer provided in the battery 20 stores the identification information of the electric motorbike 34 on which the battery 20 is mounted, in the storage device provided in the battery 20. For example, identification information of the electric motorbike 34 on which the battery 20 is mounted during a period from after being supplied last from the battery station 110 to before being returned to the battery station 110 next, is stored in the storage device of the battery 20.

Note that the computer provided in the battery 20 may store, in the storage device provided in the battery 20, the identification information of the electric motorbike 34 on which the battery 20 is mounted and information indicating a time at which the battery 20 is mounted on the electric motorbike 34, in association with each other. Accordingly, for example, processing for checking whether there is an overlap of data can be executed in the management server 120.

Next, when the battery 20 is mounted on the battery station 110, the number of times of attachment/detachment management unit 424 accesses the storage device provided in the battery 20 to acquire the identification information of the electric motorbike 34 on which the battery 20 is mounted and/or information indicating the time at which the battery 20 is mounted on the electric motorbike 34. After acquiring the above-described information, the number of times of attachment/detachment management unit 424 may delete information related to the electric motorbike 34 on which the battery 20 is mounted, from the storage device provided in the battery 20.

Next, the number of times of attachment/detachment management unit 424 derives, based on the information acquired from the storage device provided in the battery 20, the number of times of attachment/detachment of each connector of the electric motorbike 34 during one lending period. The number of times of attachment/detachment management unit 424 may transmit, to the management server 120, the identification information of the electric motorbike 34 acquired from the storage device provided in the battery 20 and information indicating the above-described number of times of attachment/detachment in association with each other.

For example, the number of times of attachment/detachment management unit 424 assumes that the number of times of attachment/detachment of each connector of the electric motorbike 34 during one lending period as one. The number of times of attachment/detachment management unit 424 increase an accumulated value of the number of times of attachment/detachment of each connector of the electric motorbike 34 identified by the identification information included in the information acquired from the storage device provided in the battery 20, by one.

For example, when the number of times of attachment/detachment management unit 424 is managing the total number of times of attachment/detachment of each connector of the battery 20 during one lending period, the number of times of attachment/detachment management unit 424 assumes, as the number of times of attachment/detachment of each connector of the electric motorbike 34, a difference between (i) the total number of times of attachment/detachment of each connector of the battery 20 during the lending period and (ii) the number of times of attachment/detachment between each connector of the battery 20 and each connector of the battery station 110 to which the battery 20 is returned, during the lending period. The number of times of attachment/detachment management unit 424 increases the accumulated value of the number of times of attachment/detachment of each connector of the electric motorbike 34 identified by the identification information included in the information acquired from the storage device provided in the battery 20, by the above-described difference. When the information acquired from the storage device provided in the battery 20 includes identification information of the plurality of electric motorbikes 34, the accumulated value of the number of times of attachment/detachment of each connector of the electric motorbike 34 is increased by the above-described difference/the number of pieces of identification information, by the respective pieces of identification information.

Unless there are no special circumstances, the battery 20 taken out of the battery station 110 is mounted on a single electric motorbike 34 during one lending period. Further, normally, the total number of times of attachment/detachment of each connector of the battery 20 during one lending period is one. Similarly, during one lending period, the number of times of attachment/detachment between each connector of the battery 20 and each connector of the battery station 110 to which the battery 20 is returned is one. Therefore, as described above, even when the number of times of attachment/detachment of each connector of the electric motorbike 34 during one lending period is assumed to be one, the deterioration state of each connector of the one or more electric motorbikes 34 can be managed.

Note that the deterioration management unit 420 may transfer the information acquired from the storage device provided in the battery 20 to the management server 120. In this case, the deterioration management unit 420 does not need to execute the processing for deriving the number of times of attachment/detachment of each connector of the battery 20.

In the present embodiment, an example of the battery management system 100 has been described while taking the case where the deterioration management unit 420 is provided in the battery station 110 as an example. However, the battery management system 100 is not limited to the present embodiment. In another embodiment, a part or all of the deterioration management unit 420 may be provided in the electric motorbike 34. For example, a part or all of the functions of the deterioration management unit 420 is/are realized by a program that operates on the computer of the electric motorbike 34 cooperating with hardware of the electric motorbike 34.

In this case, the deterioration management unit 420 provided in the electric motorbike 34 manages the number of times the battery 20 is accommodated in the slot provided in the electric motorbike 34. The slot provided in the electric motorbike 34 may have a configuration similar to that of the slot 112. Further, the deterioration management unit 420 provided in the electric motorbike 34 manages the number of times of attachment/detachment of each connector provided in the slot of the electric motorbike 34.

The deterioration management unit 420 provided in the electric motorbike 34 may acquire, regarding the power connector 42 of a particular electric motorbike 34 and the power connector 22 of the battery 20 accommodated in the slot of the particular electric motorbike 34, the number of times of attachment/detachment between the power connector 42 of the electric motorbike 34 and the power connector 22 of the battery 20, by procedures similar to the procedures described above. Similarly, the deterioration management unit 420 provided in the electric motorbike 34 may acquire, regarding the communication connector 44 of a particular electric motorbike 34 and the communication connector 24 of the battery 20 accommodated in the slot of the particular electric motorbike 34, the number of times of attachment/detachment between the communication connector 44 of the electric motorbike 34 and the communication connector 24 of the battery 20, by procedures similar to the procedures described above.

For example, the deterioration management unit 420 provided in the electric motorbike 34 increases the accumulated value of the number of times of attachment/detachment of each connector of the battery 20 by one, every time the battery 20 is accommodated in the slot of the electric motorbike 34. Further, every time the battery 20 is accommodated in the slot of the electric motorbike 34, the accumulated value of the number of times of attachment/detachment of each connector of the electric motorbike 34 is increased by one.

Accordingly, the deterioration management unit 420 can manage the accumulated value of the number of times of attachment/detachment of each connector of the battery 20 during a particular period and/or the accumulated value of the number of times of attachment/detachment of each connector of the electric motorbike 34 during a particular period. The above-described particular period may be one lending period, or may be a period in which a particular time point is set as an origin. Examples of the particular time point include a usage start time point of each connector, a time point at which the battery 20 is supplied last, a time point the battery 20 is mounted on the electrical power utility equipment, and the like.

The deterioration management unit 420 provided in the electric motorbike 34 may store, in the storage device provided in the battery 20, the identification information of the battery 20 and information indicating the accumulated value of the number of times of attachment/detachment of each connector of the battery 20 during the above-described particular period in association with each other. The deterioration management unit 420 may store, in the storage device provided in the battery 20, the identification information of the electric motorbike 34 and information indicating the accumulated value of the number of times of attachment/detachment of each connector of the electric motorbike 34 during the above-described particular period in association with each other.

As described above, the information stored in the storage device provided in the battery 20 is read out by the battery station 110 and transmitted to the management server 120, for example. Note that when the electric motorbike 34 includes communication equipment, the deterioration management unit 420 may transmit, to the management server 120, the identification information of the battery 20 and the information indicating the accumulated value of the number of times of attachment/detachment of each connector of the battery 20 during the above-described particular period in association with each other. Further, the deterioration management unit 420 may transmit, to the management server 120, the identification information of the electric motorbike 34 and the information indicating the accumulated value of the number of times of attachment/detachment of each connector of the electric motorbike 34 during the above-described particular period in association with each other.

The number of times of attachment/detachment between the power connector 42 of the electric motorbike 34 and the power connector 22 of the battery 20 may be an example of another number of times of attachment/detachment. The number of times of attachment/detachment between the communication connector 44 of the electric motorbike 34 and the communication connector 24 of the battery 20 may be an example of another number of times of attachment/detachment.

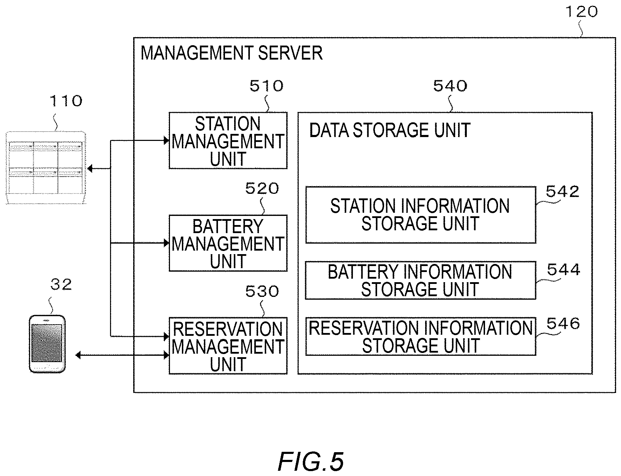

Fig. 5 schematically shows an example of an internal configuration of the management server 120. In the present embodiment, the management server 120 includes, for example, a station management unit 510, a battery management unit 520, a reservation management unit 530, and a data storage unit 540. In the present embodiment, the data storage unit 540 includes a station information storage unit 542, a battery information storage unit 544, and a reservation information storage unit 546.

In the present embodiment, the station management unit 510 manages one or more battery stations 110 constituting the battery management system 100. The station management unit 510 stores various types of information related to each of the one or more battery stations 110 in the station information storage unit 542 of the data storage unit 540.

In the present embodiment, the station management unit 510 acquires various types of information related to each battery station from each of the one or more battery stations 110. The station management unit 510 generates information indicating the policy or priority described above, for each of the one or more battery stations 110. The station management unit 510 transmits the information indicating the policy or priority related to each battery station, to each of the one or more battery stations 110. The station management unit 510 will be described later in detail.

In the present embodiment, the battery management unit 520 manages one or more batteries 20. The battery management unit 520 manages at least one of an operational state, a charged state, a storage state, or a deterioration state of each of the one or more batteries 20 as management targets, for example. The battery management unit 520 stores the various types of information related to the one or more batteries 20 in the battery information storage unit 544 of the data storage unit 540.

In the present embodiment, the battery management unit 520 manages a charging plan of the one or more batteries 20, for example. The battery management unit 520 manages, for each of the one or more battery stations 110, a charging plan of the batteries 20 stored in each battery station.

In one embodiment, the battery management unit 520 creates the charging plan of the batteries 20 based on at least one of a reservation request from the communication terminal 32 or a demand prediction of the battery 20, for example. In another embodiment, the battery management unit 520 acquires, from each of the one or more battery stations 110, information indicating a content of the charging plan generated by the charge/discharge control unit 244 of each battery station. Examples of the charging plan include (i) information in which information indicating a time and information indicating the number of lendable batteries 20 that have completed charging before the time are associated with each other, (ii) information in which information indicating a time and identification information of the slot 112 for which charging of the battery 20 is to be completed before the time are associated with each other, and the like.

In the present embodiment, the battery management unit 520 manages progress of the charging plan of each of the one or more battery stations 110. For example, the battery management unit 520 acquires, from each of the one or more battery stations 110, information indicating the charging rate or SOC of the batteries 20 stored in each battery station.

In the present embodiment, the reservation management unit 530 manages a reservation status of the battery 20 as the management target. For example, the reservation management unit 530 accepts a reservation request from the communication terminal 32 and executes reservation processing. The reservation management unit 530 stores information indicating a result of executing the reservation processing (may be referred to as reservation information) in the reservation information storage unit 546 of the data storage unit 540. The reservation information includes, for example, information related to a user ID, a desired lending date, a desired lending time, a station ID, a battery ID, a desired charged state, a usage fee, a payment method, or the like. The reservation information may also include information indicating a time at which the reservation request has been accepted (may be referred to as reservation time) and information indicating a position of the user at the reservation time.

In the present embodiment, the data storage unit 540 stores various types of information. In one embodiment, the data storage unit 540 stores information to be used in the information processing by the management server 120. In another embodiment, the data storage unit 540 stores information generated or acquired by the information processing by the management server 120.

The station management unit 510 may be an example of the information acquisition device or the estimation device. The station management unit 510 may be an example of the attachment/detachment information acquisition unit or the deterioration information acquisition unit.

Note that in the present embodiment, the battery management system 100 has been described in detail while taking, as an example, the case where (i) the management server 120 generates information indicating the policy or priority related to each of the one or more battery stations 110, and (ii) the lending management unit 248 of each battery station selects the battery 20 to be lent out to the user 30 or selects the slot 112 to be used for returning the battery 20, based on the policy or priority. However, the battery management system 100 is not limited to the present embodiment. In another embodiment, at least one of the above-described selection processing for the battery 20 or the selection processing for the slot 112 may be executed in the management server 120 instead of being executed by the lending management unit 248. In this case, the management server 120 or the respective units thereof may be an example of the selection unit.

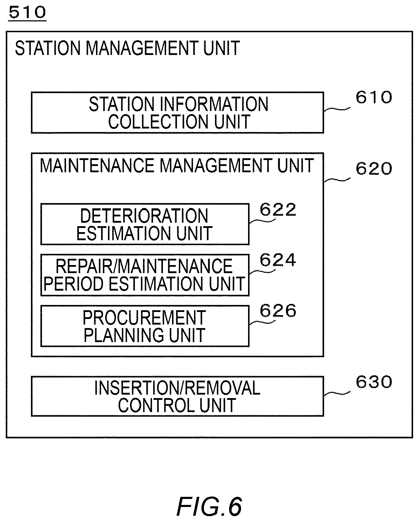

Fig. 6 schematically shows an example of an internal configuration of the station management unit 510. In the present embodiment, the station management unit 510 includes, for example, a station information collection unit 610, a maintenance management unit 620, and an insertion/removal control unit 630. In the present embodiment, the maintenance management unit 620 includes a deterioration estimation unit 622, a repair/maintenance period estimation unit 624, and a procurement planning unit 626.

In the present embodiment, the station information collection unit 610 collects various types of information related to each of the one or more battery stations 110. For example, the station information collection unit 610 collects various types of information related to a state of each battery station from the state management unit 246 of each battery station. More specifically, the station information collection unit 610 acquires information indicating a state of each of the plurality of slots 112 provided in each battery station.

As described above, an example of the state of each slot is the usage state or deterioration state of each slot. Examples of the usage state or deterioration state of each slot include the number of times of accommodation of the battery 20 in each slot, the number of times of attachment/detachment of each slot and the battery 20, and the like. The above-described number of times of attachment/detachment may be the number of times determined or estimated based on the above-described number of times of accommodation. Further, the above-described number of times of accommodation and number of times of attachment/detachment can be used as an example of an indicator that indicates the deterioration degree of the connector 350 of the slot 112.

In the present embodiment, the maintenance management unit 620 manages maintenance or repair/maintenance of the battery station 110. For example, the maintenance management unit 620 manages a maintenance plan or repair/maintenance plan of the battery station 110 or constituent components thereof. Further, the maintenance management unit 620 manages a procurement plan of a component, equipment, fixture, or the like to be used for the maintenance or repair/maintenance of the battery station 110.

In the present embodiment, the deterioration estimation unit 622 estimates the deterioration degree of the battery station 110 or the constituent components thereof. For example, the deterioration estimation unit 622 estimates the deterioration degree of the power connector 352 or communication connector 354 of the slot 112.

More specifically, the deterioration estimation unit 622 acquires, from the station information collection unit 610 or the station information storage unit 542, information indicating the number of times of attachment/detachment between each slot and the battery 20, for each of the one or more battery stations 110. Next, based on the number of times of attachment/detachment between each slot and the battery 20, the deterioration estimation unit 622 determines or estimates the deterioration degree of the power connector 352 or communication connector 354 of each slot.

In one embodiment, the deterioration estimation unit 622 estimates, regarding the power connector 22 and the power connector 352, the deterioration degree of at least one of the power connector 22 or the power connector 352. The deterioration degree of at least one of the power connector 22 or the power connector 352 regarding the power connector 22 and the power connector 352 may simply be referred to as the deterioration degree of at least one of the power connector 22 or the power connector 352, the deterioration degree in at least one of the power connector 22 or the power connector 352, or the like.

In another embodiment, the deterioration estimation unit 622 estimates, regarding the communication connector 24 and the communication connector 354, the deterioration degree of at least one of the communication connector 24 or the communication connector 354. The deterioration degree of at least one of the communication connector 24 or the communication connector 354 regarding the communication connector 24 and the communication connector 354 may simply be referred to as the deterioration degree of at least one of the communication connector 24 or the communication connector 354, the deterioration degree in at least one of the communication connector 24 or the communication connector 354, or the like.

For example, the deterioration estimation unit 622 determines or estimates the deterioration degree of each connector based on the above-described accumulated value of the number of times of attachment/detachment during a period from the usage start time point of each connector to a time point at which the estimation processing is performed. More specifically, the deterioration estimation unit 622 determines or estimates the deterioration degree of each connector based on the above-described accumulated value of the number of times of attachment/detachment and the number of times of attachment/detachment guaranteed by a manufacturer or seller of each connector (may be referred to as the number of guaranteed times).

For example, the deterioration estimation unit 622 determines a remaining period before the accumulated value of the number of times of attachment/detachment in each connector reaches the number of guaranteed times, as the deterioration degree of each connector. More specifically, first, based on the above-described accumulated value of the number of times of attachment/detachment during a period from the usage start time point of each connector to the time point at which the estimation processing is performed, the deterioration estimation unit 622 calculates the number of times of attachment/detachment of the battery 20 per unit period for each slot 112, for each of the one or more battery stations 110. Examples of the unit period include one day, one week, two weeks, four weeks, one month, and the like. As described above, the number of times of attachment/detachment of the battery 20 indicates the number of times of accommodation, the number of returned times, the number of lending times, or the number of replacement times of the battery 20.

For example, in a case where a fluctuation of the number of times of attachment/detachment of the battery 20 per unit period is small, and the accumulated value of the number of times of attachment/detachment of the battery 20 becomes linear with respect to an elapsed time since the usage start time point of the slot 112 or the connector 350, when the number of guaranteed times related to a particular connector is represented by A (times), the accumulated value of the number of times of attachment/detachment of the battery 20 during a period from the usage start time point of the connector to the time point at which the estimation processing is performed is represented by B (times), a length of the above-described period is represented by Y (months), and a length of the above-described remaining period is represented by X (months), the deterioration estimation unit 622 calculates the above-described remaining period based on the following Expression 1.

$$X = (A/B\text{-}1) \times Y \text{ (Expression 1)}$$

Note that the method used by the deterioration estimation unit 622 to calculate the above-described remaining period is not limited to the above-described embodiment. In another embodiment, based on data on the above-described accumulated value of the number of times of attachment/detachment during the period from the usage start time point of each connector to the time point at which the estimation processing is performed, the deterioration estimation unit 622 derives, using the above-described accumulated value of the number of times of attachment/detachment as an objective function, an approximate function that uses the elapsed time since the usage start time point of the slot 112 or the connector 350 as an explanatory variable. Based on the above-described approximate function, the deterioration estimation unit 622 calculates the remaining period before the accumulated value of the number of times of attachment/detachment in each connector reaches the number of guaranteed times. Further in another embodiment, the deterioration estimation unit 622 estimates the above-described X from the above-described B and Y using an estimation model generated by machine learning for estimating the above-described remaining period, from the length of the period from the usage start time point of each connector and the above-described accumulated value of the number of times of attachment/detachment during the period.

In the present embodiment, the repair/maintenance period estimation unit 624 estimates, for each of the one or more battery stations 110, a repair/maintenance period of the battery station or the constituent components thereof. For example, based on the deterioration degree of each battery station or the constituent components thereof estimated by the deterioration estimation unit 622, the repair/maintenance period estimation unit 624 estimates the repair/maintenance period of the battery station or the constituent components thereof. In the present embodiment, the repair/maintenance period estimation unit 624 estimates the above-described repair/maintenance period based on the above-described deterioration degree and a criterion that has been predetermined in consideration of durability of the battery station 110 or the constituent components thereof. Information indicating the above-described predetermined criterion is stored in the station information storage unit 542, for example.

More specifically, in one embodiment, when the number of times of attachment/detachment between the connector 350 of the slot 112 and the power connector 22 or communication connector 24 of the battery 20 becomes larger than a predetermined value (may be referred to as the endurable number of times of insertion/removal), the repair/maintenance period estimation unit 624 judges that the replacement period of the slot 112 or the connector 350 has come. In another embodiment, based on a past history of the number of times of attachment/detachment between the connector 350 of the slot 112 and the power connector 22 or communication connector 24 of the battery 20, the repair/maintenance period estimation unit 624 estimates a period in which the above-described number of times of attachment/detachment exceeds the predetermined endurable number of times of insertion/removal. The number of times of attachment/detachment guaranteed by the manufacturer or seller of each connector may be an example of the endurable number of times of insertion/removal.

In one embodiment, when, for each of the one or more battery stations 110, the repair/maintenance period of the battery station or the constituent components thereof has come, the repair/maintenance period estimation unit 624 outputs information indicating the arrival of the above-described repair/maintenance period to the procurement planning unit 626, for example. In another embodiment, the repair/maintenance period estimation unit 624 outputs, for each of the one or more battery stations 110, information indicating a period in which repair/maintenance of the battery station or the constituent components thereof is predicted to be performed (may be referred to as repair/maintenance prediction period) to the procurement planning unit 626, for example.

In the present embodiment, the procurement planning unit 626 generates at least a part of a manufacturing plan or a distribution plan of replacement equipment, a replacement component, repair/maintenance goods, or repair/maintenance equipment (may be referred to as product) used for the maintenance or repair/maintenance of at least one of the battery stations 110. The manufacturing plan may be information in which (i) information indicating a delivery date, (ii) information indicating a type and specification of a product, and (iii) information indicating the number of products are associated with one another. The manufacturing plan may also include information indicating a price of the product. The distribution plan may be information in which (i) information indicating a delivery time of a product and (ii) information indicating a delivery destination of the product are associated with each other. The distribution plan may also include information indicating a delivery cost of the product.

For example, when, in the maintenance or repair/maintenance of a particular battery station 110, the particular battery station 110 is to be replaced in whole, the procurement planning unit 626 generates at least a part of a manufacturing plan and delivery plan of a new battery station 110. Further, when, in the maintenance or repair/maintenance of a particular battery station 110, a particular slot 112 is to be replaced in whole, the procurement planning unit 626 generates at least a part of a manufacturing plan and delivery plan of a new slot 112. Similarly, when, in the maintenance or repair/maintenance of a particular battery station 110, a part of a constituent component of a particular slot 112 is to be replaced or repaired, the procurement planning unit 626 generates at least a part of a manufacturing plan and delivery plan of a replacement product or repair product for the constituent component.

Further, the procurement planning unit 626 outputs information to be utilized for the above-described manufacturing plan or distribution plan. For example, according to a request from a terminal (not shown) used by the administrator or maintenance personnel of the battery station 110, the procurement planning unit 626 outputs information to be utilized for the above-described manufacturing plan or distribution plan as a response to the request. Exemplified as the information to be utilized for the manufacturing plan or the distribution plan is at least one of information indicating a completion period of a product, information indicating a type and specification of a product, information indicating the number of products, information indicating a price of a product, information indicating a delivery time of a product, information indicating a delivery destination of a product, and information indicating a delivery cost of a product.

According to the present embodiment, the station management unit 510 manages the number of times of accommodation of the battery 20, the number of times of attachment/detachment of the battery 20, or the like in each of the one or more slots 112. Accordingly, by predicting progress of deterioration of the slot 112, the station management unit 510 can relatively accurately estimate the replacement period of the slot 112. As a result, it becomes possible to maintain a stock of replacement components or the like at an appropriate level, and suppress stock management costs for the replacement components or the like.

In the present embodiment, the insertion/removal control unit 630 controls lending and return of the battery 20 in each of the one or more battery stations 110. For example, the insertion/removal control unit 630 generates a control signal for controlling insertion/removal of the battery 20 in each of the one or more battery stations 110, and transmits the control signal to each battery station. Accordingly, lending an return of the battery 20 in each battery station can be controlled.

In one embodiment, the insertion/removal control unit 630 generates a control signal including information indicating the policy or priority described above. For example, based on the deterioration degrees of the plurality of slots 112 provided in the battery station 110 as a control target, the insertion/removal control unit 630 generates information indicating the policy or priority related to the battery station 110 as the control target.

More specifically, the insertion/removal control unit 630 acquires, from the station information collection unit 610, information indicating the number of detection times of the battery 20, information indicating the number of times of accommodation of the battery 20, or information indicating the number of times of attachment/detachment between each slot and the battery 20, in each slot of the battery station 110 as the control target. As the number of detection times of the battery 20 in the slot 112, the number of times of accommodation of the battery 20, or the number of times of attachment/detachment between each slot and the battery 20 increases, the deterioration degree of the slot 112 also increases.

For example, the insertion/removal control unit 630 determines the priority of each slot such that the priority becomes higher as the deterioration degree of the slot 112 becomes smaller. In this case, as the lending and return of the battery 20 are repeated based on the control signals including the information indicating the above-described priority, the unbalanced state of the deterioration degrees of the plurality of slots 112 provided in the battery station 110 can be eliminated.

For example, the insertion/removal control unit 630 determines the priority of each slot such that the priority becomes higher as the deterioration degree of the slot 112 becomes larger. In this case, as the lending and return of the battery 20 are repeated based on the control signals including the information indicating the above-described priority, deterioration of a particular slot 112 can be promoted more than the deterioration of other slots 112.

In another embodiment, the insertion/removal control unit 630 generates a control signal including identification information of the battery 20 to be lent out to a particular user 30 or the slot 112 accommodating the battery 20 to be lent out next. A control signal including identification information of the battery 20 to be returned from a particular user 30 or the slot 112 that is to accept the battery 20 to be returned next is generated. The insertion/removal control unit 630 generates the above-described control signal based on the deterioration degrees of the plurality of slots 112 provided in the battery station 110 as the control target.

More specifically, in one embodiment, the insertion/removal control unit 630 selects the slot 112 to be the control target for the lending processing such that the battery 20 accommodated in the slot 112 having a smaller deterioration degree is provided to the user 30 more preferentially than the battery 20 accommodated in the slot 112 having a larger deterioration degree. Similarly, the insertion/removal control unit 630 selects the slot 112 to be the control target for the return processing such that the slot 112 having a smaller deterioration degree accepts the battery 20 more preferentially than the slot 112 having a larger deterioration degree. In this case, as the lending and return of the battery 20 are repeated based on the control signals including the identification information of the above-described slots 112, the unbalanced state of the deterioration degrees of the plurality of slots 112 provided in the battery station 110 can be eliminated.

In another embodiment, the insertion/removal control unit 630 selects the slot 112 to be the control target for the lending processing such that the battery 20 accommodated in the slot 112 having a larger deterioration degree is provided to the user 30 more preferentially than the battery 20 accommodated in the slot 112 having a smaller deterioration degree. Similarly, the insertion/removal control unit 630 selects the slot 112 to be the control target for the return processing such that the slot 112 having a larger deterioration degree accepts the battery 20 more preferentially than the slot 112 having a smaller deterioration degree. In this case, as the lending and return of the battery 20 are repeated based on the control signals including the identification information of the above-described slots 112, deterioration of a particular slot 112 can be promoted more than the deterioration of other slots 112.

The station information collection unit 610 may be an example of the attachment/detachment information acquisition unit, the deterioration information acquisition unit, or the information acquisition device. The maintenance management unit 620 may be an example of the estimation unit, the repair/maintenance information acquisition unit, the first output unit, or the second output unit. The deterioration estimation unit 622 may be an example of the estimation unit. The procurement planning unit 626 may be an example of the repair/maintenance information acquisition unit or the first output unit. The insertion/removal control unit 630 may be an example of the attachment/detachment information acquisition unit, the deterioration information acquisition unit, or the information acquisition device. The insertion/removal control unit 630 may be an example of the selection unit. The information indicating the arrival of the repair/maintenance period of the battery station 110 may be an example of the repair/maintenance information. The information indicating the period in which the repair/maintenance of the battery station 110 or the constituent components thereof is predicted to be performed may be an example of the repair/maintenance information.

[One example of another embodiment] Note that in the present embodiment, the battery management system 100 has been described in detail while taking the case where the maintenance management unit 620 is provided in the management server 120 as an example. However, the battery management system 100 is not limited to the present embodiment. In another embodiment, all or a part of the maintenance management unit 620 may be provided in the battery station 110.

Further, in the present embodiment, the battery management system 100 has been described in detail while taking, as an example, the case where the deterioration estimation unit 622 determines or estimates, for each of the one or more battery stations 110, the deterioration degree of the power connector 352 or communication connector 354 of each slot provided in each battery station. However, the battery management system 100 is not limited to the present embodiment.

In another embodiment, the deterioration estimation unit 622 determines or estimates the deterioration degree of at least one of the power connector 22 or the communication connector 24 provided in each of the one or more batteries 20. Based on the number of times of attachment/detachment between at least one of the power connector 22 or the communication connector 24 provided in each of the one or more batteries 20 and the corresponding connector provided in any battery station 110, the deterioration estimation unit 622 determines or estimates the deterioration degree of at least one of the power connector 22 or the communication connector 24. Based on the number of times of attachment/detachment between at least one of the power connector 22 or the communication connector 24 provided in each of the one or more batteries 20 and the corresponding connector provided in any electric motorbike 34, the deterioration estimation unit 622 determines or estimates the deterioration degree of at least one of the power connector 22 or the communication connector 24.

As described above, each of the one or more battery stations 110 accesses the storage device of the battery 20 accommodated in each slot to acquire various types of information. Further, each of the one or more battery stations 110 transmits the information acquired from the storage device of the battery 20 to the management server 120. Accordingly, the deterioration estimation unit 622 can acquire the various types of information stored in the storage device of the battery 20 via the station information collection unit 610, for example.

For example, by procedures similar to the procedures described in relation to the another embodiment of the deterioration management unit 420, the deterioration estimation unit 622 first derives the number of times of attachment/detachment of the power connector 22 and/or the communication connector 24 of each of the one or more batteries 20 based on the various types of information stored in the storage device of each of the one or more batteries 20. Next, based on the number of times of attachment/detachment of the power connector 22 of each of the one or more batteries 20, the deterioration estimation unit 622 determines or estimates the deterioration degree of the power connector 22 of each of the one or more batteries 20. Similarly, based on the number of times of attachment/detachment of the communication connector 24 of each of the one or more batteries 20, the deterioration estimation unit 622 determines or estimates the deterioration degree of the communication connector 24 of each of the one or more batteries 20.

As described above, the number of times of attachment/detachment of each connector of a particular battery 20 is derived based on the number of times of attachment/detachment of the connectors between the particular battery 20 and a particular battery station 110 accommodating the particular battery 20. Further, as described above, the number of times of attachment/detachment of each connector of a particular battery 20 is derived based on the number of times of attachment/detachment of the connectors between the particular battery 20 and a particular electric motorbike 34 accommodating the particular battery 20. Accordingly, based on the number of times of attachment/detachment between each connector of a particular battery 20 and each connector of a particular battery station 110 and/or the number of times of attachment/detachment between each connector of the particular battery 20 and each connector of a particular electric motorbike, the deterioration estimation unit 622 can determine or estimate the deterioration degree of the power connector 22 and/or communication connector 24 of the particular battery 20.

For example, based on a value obtained by doubling the number of times of attachment/detachment between the power connector 22 of a particular battery 20 and the power connector 352 of a particular battery station 110, the deterioration estimation unit 622 determines or estimates the deterioration degree of the power connector 22 of the particular battery 20. Accordingly, the deterioration estimation unit 622 acquires information indicating the deterioration degree of the power connector 22 of the particular battery 20. The deterioration estimation unit 622 may store the information indicating the deterioration degree of the power connector 22 of the particular battery 20 in the data storage unit 540.

For example, the deterioration estimation unit 622 acquires information indicating the number of times of attachment/detachment between the power connector 22 of a particular battery 20 and the power connector 352 of a particular battery station 110. Further, the deterioration estimation unit 622 acquires information indicating the number of times of attachment/detachment between the power connector 22 of a particular battery 20 and the power connector 42 of a particular electric motorbike 34. Based on (i) the number of times of attachment/detachment between the power connector 22 of a particular battery 20 and the power connector 352 of a particular battery station 110 and (ii) the number of times of attachment/detachment between the power connector 22 of the particular battery 20 and the power connector 42 of a particular electric motorbike 34, the deterioration estimation unit 622 determines or estimates the deterioration degree of the power connector 22 of the particular battery 20. Accordingly, the deterioration estimation unit 622 acquires information indicating the deterioration degree of the power connector 22 of the particular battery 20. The deterioration estimation unit 622 may store the information indicating the deterioration degree of the power connector 22 of the particular battery 20 in the data storage unit 540.

Note that as described above, each of the one or more battery stations 110 can also transmit, to the management server 120, information indicating the number of times of attachment/detachment of each of the various connectors, that has been derived based on the information acquired from the storage device of each of the batteries 20. In this case, the deterioration estimation unit 622 may omit the processing of deriving the number of times of attachment/detachment of the power connector 22 and/or the communication connector 24 of each of the one or more batteries 20 based on the various types of information stored in the storage device of each of the one or more batteries 20.

Further in another embodiment, the deterioration estimation unit 622 determines or estimates the deterioration degree of at least one of the power connector 42 or the communication connector 44 provided in each of the one or more electric motorbikes 34. Based on the number of times of attachment/detachment between at least one of the power connector 42 or the communication connector 44 provided in each of the one or more electric motorbikes 34 and any battery 20, the deterioration estimation unit 622 determines or estimates the deterioration degree of at least one of the above-described power connector 42 or communication connector 44.

As described above, the deterioration estimation unit 622 can acquire the various types of information stored in the storage device of the battery 20 via the station information collection unit 610, for example. As described in relation to the another embodiment of the deterioration management unit 420, identification information of the electric motorbikes 34 on which the respective batteries are mounted after each battery is supplied from any of the one or more battery stations 110 to before being returned to any of the one or more battery stations 110, can be stored in the storage device of each of the one or more batteries 20.

For example, by procedures similar to the procedures described in relation to the another embodiment of the deterioration management unit 420, the deterioration estimation unit 622 first derives the number of times of attachment/detachment of the power connector and/or the communication connector of each of the one or more electric motorbikes 34 based on the various types of information stored in the storage device of each of the one or more batteries 20. Next, based on the number of times of attachment/detachment of the power connector 42 of each of the one or more electric motorbikes 34, the deterioration estimation unit 622 determines or estimates the deterioration degree of the power connector 42 of each of the one or more electric motorbikes 34. Similarly, based on the number of times of attachment/detachment of the communication connector 44 of each of the one or more electric motorbikes 34, the deterioration estimation unit 622 determines or estimates the deterioration degree of the communication connector 44 of each of the one or more electric motorbikes 34.

Accordingly, the deterioration estimation unit 622 can acquire information indicating the deterioration degree of the power connector 42 and/or the communication connector 44 for each of the one or more electric motorbikes 34. The deterioration estimation unit 622 may store the information indicating the deterioration degree of the power connector 42 and/or the communication connector 44 of each of the one or more electric motorbikes 34 in the data storage unit 540.

Further, in the present embodiment, the battery management system 100 has been described in detail while taking the case where the repair/maintenance period estimation unit 624 estimates the repair/maintenance period of the battery station 110 or the constituent components of the battery station 110, as an example. However, the battery management system 100 is not limited to the present embodiment. In another embodiment, the repair/maintenance period estimation unit 624 estimates, for each of the one or more batteries 20, a repair/maintenance period or a recovery period of the battery or the constituent components thereof. For example, for each of the one or more batteries 20, the repair/maintenance period estimation unit 624 estimates the repair/maintenance period or recovery period of the battery based on the deterioration degree of the power connector 22 and/or communication connector 24 of each battery.

For example, when determined that the repair/maintenance period or recovery period of the battery 20 has come, repair/maintenance to replace the power connector 22 or the communication connector 24, or the like is performed on the battery 20. In this case, the battery 20 subjected to the repair/maintenance is again used for lending. For example, when determined that the repair/maintenance period or recovery period of the battery 20 has come, the battery 20 is recovered from the market. In this case, the recovered battery 20 is diverted to other applications or decomposed to be reused or recycled.

For example, at a time point the deterioration degree of the power connector 22 or the communication connector 24 reaches a predetermined degree, deterioration of battery performance of the battery 20 is relatively progressed in many cases. Therefore, for example, when a progression speed of the deterioration of the battery performance of the battery 20 is higher than the progression speed of the deterioration of the power connector 22 or the communication connector 24, the repair/maintenance period estimation unit 624 may estimate, for each of the one or more batteries 20, the recovery period of the battery 20 based on the deterioration degree of the power connector 22 and/or the communication connector 24 of each battery.

Further in another embodiment, for each of the one or more electric motorbikes 34, the repair/maintenance period estimation unit 624 estimates the repair/maintenance period of the electric motorbike or the constituent components thereof. For example, for each of the one or more electric motorbikes 34, the repair/maintenance period estimation unit 624 estimates the repair/maintenance period of the electric motorbike based on the deterioration degree of the power connector 42 and/or the communication connector 44 of each electric motorbike 34.

Further, in the present embodiment, the battery management system 100 has been described in detail while taking the case where the station management unit 510 is provided in the management server 120 as an example. However, the battery management system 100 is not limited to the present embodiment. In another embodiment, all or a part of the station management unit 510 may be provided in the electric motorbike 34. For example, a program that operates on the computer of the electric motorbike 34 may cooperate with the hardware of the electric motorbike 34 to realize a part or all of the functions of the station management unit 510.

A part or all of the station management unit 510 provided in the electric motorbike 34 acquires, by procedures similar to the procedures described above, information indicating the number of times of attachment/detachment of each connector of the battery 20 and/or the electric motorbike 34 from the deterioration management unit 420 provided in the electric motorbike 34, for example. Further, a part or all of the station management unit 510 provided in the electric motorbike 34 acquires information indicating the deterioration degree of each connector of the battery 20 and/or the electric motorbike 34 based on the above-described number of times of attachment/detachment of each connector of the battery 20 and the electric motorbike 34.

For example, the deterioration estimation unit 622 provided in the electric motorbike 34 determines or estimates the deterioration degree of each connector of the battery 20. By procedures similar to the procedures described above, the deterioration estimation unit 622 provided in the electric motorbike 34 determines or estimates the deterioration degree of each connector of the battery 20 based on the number of times each connector of the battery 20 is attached/detached to/from each connector of the electric motorbike 34. Further, by procedures similar to the procedures described above, the deterioration estimation unit 622 provided in the electric motorbike 34 determines or estimates the deterioration degree of each connector of the electric motorbike 34 based on the number of times each connector of the battery 20 is attached/detached to/from each connector of the electric motorbike 34.

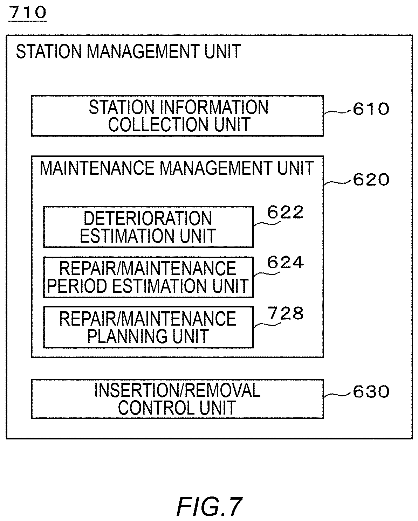

Fig. 7 schematically shows an example of an internal configuration of the station management unit 710. The station management unit 710 may be an example of another embodiment of the station management unit 510. In the present embodiment, the station management unit 710 is different from the station management unit 510 in that the maintenance management unit 620 includes a repair/maintenance planning unit 728 in place of the procurement planning unit 626. It is different from the station management unit 510 in that the repair/maintenance period estimation unit 624 outputs information indicating an arrival of the above-described repair/maintenance period or information indicating the above-described repair/maintenance prediction period, to the repair/maintenance planning unit 728. Regarding configurations other than the above-described different points, the station management unit 710 may have features similar to those of the station management unit 510.

In the present embodiment, for at least one of the battery stations 110, the repair/maintenance planning unit 728 generates at least a part of a maintenance plan or a repair/maintenance plan of the battery station or the constituent components thereof. Examples of the constituent components of the battery station 110 include the slot 112, the connector 350, the power connector 352, the communication connector 354, and the like. Examples of the maintenance or repair/maintenance of the battery station 110 or the constituent components thereof include a replacement of the battery station 110, a repair or replacement of the constituent component of the battery station 110, and the like. Examples of the replacement of the constituent component of the battery station 110 include a replacement of the slot 112, a replacement of the connector 350, a replacement of the power connector 352 or the communication connector 354, and the like.

For example, the repair/maintenance planning unit 728 acquires, from the repair/maintenance period estimation unit 624, at least one of (i) information indicating an arrival of a repair/maintenance period of at least one of the battery stations 110 or (i) information indicating a repair/maintenance prediction period of at least one of the battery stations 110 or the constituent components thereof. Based on at least one of the above-described information indicating the arrival of the repair/maintenance period or the information indicating the repair/maintenance prediction period, the repair/maintenance planning unit 728 generates at least a part of the maintenance plan or repair/maintenance plan of the battery station or the constituent components thereof.

The maintenance plan or repair/maintenance plan may be information in which (a) information indicating a time or period and (b) information indicating at least one of (i) a content of a work to be performed at the time or during the period, (ii) the number of hours or man-hour of the above-described work, (iii) replacement equipment, a replacement component, repair/maintenance goods, or repair/maintenance equipment used in the above-described work, (iv) a cost of the above-described work (for example, cumulative cost or budget), and (v) a condition related to maintenance personnel who performs the work at the time or during the period, are associated with each other. Examples of the above-described work include an inspection, repair, replacement, and the like. Examples of the condition related to maintenance personnel include conditions related to the number of the maintenance personnel, identification information of the maintenance personnel, a skill required for the maintenance personnel, a labor cost of the maintenance personnel, and the like.

Further, the repair/maintenance planning unit 728 outputs information to be utilized for the above-described maintenance plan or repair/maintenance plan. For example, according to a request from a terminal (not shown) used by the administrator or maintenance personnel of the battery station 110, the repair/maintenance planning unit 728 outputs information to be utilized for the above-described maintenance plan or repair/maintenance plan as a response to the request. An example of the information to be utilized for the maintenance plan or repair/maintenance plan is at least one of information indicating a time or period of a work, information indicating a content of the work, information indicating the number of hours or man-hour of the work, information indicating replacement equipment, a replacement component, repair/maintenance goods, or repair/maintenance equipment used in the work, information indicating a cost of the work, or information indicating a condition related to maintenance personnel who performs the work.

Accordingly, for example, when the number of slots 112 that require maintenance or repair/maintenance is larger than a predetermined value or when a ratio of the number of slots 112 that require the maintenance or repair/maintenance with respect to the number of slots 112 provided in the battery station 110 is larger than a predetermined value, or the like, the administrator or maintenance personnel of the battery station 110 can determine to replace the whole battery station 110 in consideration of a construction cost and labor cost. On the other hand, for example, when the number of slots 112 that require maintenance or repair/maintenance is smaller than the predetermined value or when the ratio of the number of slots 112 that require the maintenance or repair/maintenance with respect to the number of slots 112 provided in the battery station 110 is smaller than the predetermined value, or the like, the administrator or maintenance personnel of the battery station 110 can determine to replace the whole slot 112 in consideration of the construction cost and labor cost.

According to the present embodiment, for example, the administrator or maintenance personnel of the battery station 110 can perform a component replacement work according to a plan prepared in advance. Accordingly, an excess of the number of processes for a maintenance worker can be suppressed. As a result, a reduction of the number of maintenance processes and a reduction of maintenance costs can be realized.

The repair/maintenance planning unit 728 may be an example of the repair/maintenance information acquisition unit or the second output unit.

Note that in the present embodiment, the station management unit 710 as the another embodiment of the station management unit 510 has been described in detail while taking the case where the maintenance management unit 620 includes the repair/maintenance planning unit 728 in place of the procurement planning unit 626, as an example. However, the another embodiment of the station management unit 510 is not limited to the present embodiment. In further another embodiment of the station management unit 510, the maintenance management unit 620 may include the repair/maintenance planning unit 728 together with the procurement planning unit 626.

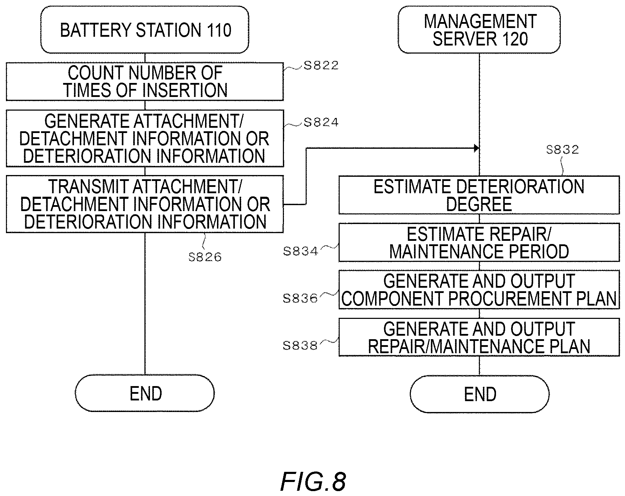

Fig. 8 schematically shows an example of the information processing in the battery management system 100. According to the present embodiment, first, in Step 822 (Step may be abbreviated to S), the slot control unit 370 of the slot 112 provided in each of the one or more battery stations 110 counts the number of times the battery 20 has been inserted into each slot.

Next, in S824, the slot control unit 370 of each battery station estimates the number of times of attachment/detachment of the battery 20 in each slot based on the number of times of insertion of the battery 20 in each slot. The slot control unit 370 generates attachment/detachment information indicating the above-described number of times of attachment/detachment. The slot control unit 370 may determine a value of any indicator that indicates the deterioration degree of each slot based on the number of times of insertion of the battery 20 in each slot. Further, the slot control unit 370 may generate deterioration information indicating the above-described deterioration degree. After that, in S826, the slot control unit 370 of each battery station transmits the above-described attachment/detachment information or deterioration information to the management server 120.

Next, in S832, the deterioration estimation unit 622 of the management server 120 estimates the deterioration degree of each slot based on the number of times of attachment/detachment of the battery 20 in each slot as necessary. Next, in S834, the repair/maintenance period estimation unit 624 estimates a repair/maintenance period of each slot. For example, the repair/maintenance period estimation unit 624 estimates the repair/maintenance period of each slot based on whether the number of times of attachment/detachment of the battery 20 in each slot is larger than the endurable number of times of insertion/removal of each slot.

Next, for example, in S836, the procurement planning unit 626 of the station management unit 510 generates at least a part of the manufacturing plan or distribution plan of the replacement equipment, the replacement component, the repair/maintenance goods, or the repair/maintenance equipment used in the maintenance or repair/maintenance of the battery station 110. Further, the procurement planning unit 626 outputs information to be utilized for the above-described manufacturing plan or distribution plan of the product.

Further, for example, in S838, the repair/maintenance planning unit 728 of the station management unit 710 generates at least a part of the maintenance plan or repair/maintenance plan of the battery station 110 or the constituent components thereof. Further, the repair/maintenance planning unit 728 outputs information to be utilized for the above-described maintenance plan or repair/maintenance plan. Accordingly, the processing ends.

According to the present embodiment, for each of the one or more battery stations 110, the number of times of attachment/detachment between the connector 350 of the battery station and the connector of the battery 20 accommodated in the battery station is managed. Further, the deterioration degree of the connector 350 of each of the one or more battery stations 110 is managed based on the above-described number of times of attachment/detachment. As a result, maintenance efficiency of the one or more battery stations 110 is improved. Further, manufacturing efficiency or distribution efficiency of the components of the one or more battery stations 110 is improved.

Note that in the embodiment shown in Figs. 1 to 8, the information processing in the battery management system 100 has been described in detail while taking, as an example, the case where the slot control unit 370, the number of times of attachment/detachment management unit 424, and the station management unit 510 acquire the number of times of insertion or number of times of accommodation of the battery 20 as information indicating the number of times of attachment/detachment. However, the information processing in the battery management system 100 is not limited to the present embodiment. In another embodiment, for example, the slot control unit 370, the number of times of attachment/detachment management unit 424, or the station management unit 510 may acquire, as the information indicating the number of times of attachment/detachment, a set of (i) identification information of each of the plurality of batteries 20 inserted into the slots 112 and (ii) information in which information indicating a time or period and identification information of the battery 20 inserted into the slot 112 at the time or during the period are associated with each other, or the like. In this case, the slot control unit 370, the number of times of attachment/detachment management unit 424, or the station management unit 510 may assume the number of pieces of the above-described identification information of the batteries 20 as the number of times of insertion or number of times of accommodation of the batteries 20.

Further, in the embodiment shown in Figs. 1 to 8, the information processing in the battery management system 100 has been described in detail while taking, as an example, the case where the battery management system 100 manages the deterioration degree, maintenance plan, or repair/maintenance plan of the battery station 110 or the constituent components thereof (for example, slot 112, connector 350, power connector 352, or communication connector 354). However, the information processing in the battery management system 100 is not limited to the present embodiment.

In another embodiment, the battery management system 100 manages the deterioration degree, maintenance plan, or repair/maintenance plan of the battery 20 or constituent components thereof (for example, communication connector 24 or power connector 22). For example, by managing the number of times of attachment/detachment between the battery station 110 and the battery 20, the battery management system 100 manages the deterioration degree, maintenance plan, or repair/maintenance plan of the communication connector 24 or power connector 22 of the battery 20. The deterioration degree, maintenance plan, or repair/maintenance plan of the communication connector 24 or power connector 22 of the battery 20 may be managed by procedures similar to those of the deterioration degree, maintenance plan, or repair/maintenance plan of the connector 350 of the battery station 110.

In one example, each of the one or more battery stations 110 stores the number of times of attachment/detachment with respect to each of the one or more batteries 20. Each of the one or more battery stations 110 transmits, at any timing, information indicating the number of times of attachment/detachment with respect to each of the one or more batteries 20 to the management server 120.

In another example, each of the one or more batteries 20 stores the number of times of attachment/detachment with respect to the one or more battery stations 110. The number of times of attachment/detachment between each battery and the one or more battery stations 110 may be (i) the number of times of attachment/detachment between each battery and each of the one or more battery stations 110 or (ii) a total value or accumulated value of the number of times of attachment/detachment between each battery and the one or more battery stations 110 while a particular time point is set as an origin. For example, in the lending processing or return processing of the battery 20 in the battery station 110, the battery station 110 or the slot control unit 370 writes information indicating the above-described number of times of attachment/detachment in the storage device provided in the battery 20. After that, for example, when the battery 20 is returned to a particular battery station 110 or when the battery 20 is accommodated in any battery station 110 at a particular timing, the battery station 110 reads out the above-described information indicating the number of times of attachment/detachment, that is stored in the storage device of the battery 20. Further, the battery station 110 transmits the above-described information indicating the number of times of attachment/detachment to the management server 120.

In these examples, the management server 120 may manage, for each battery 20, the number of times of attachment/detachment with respect to the one or more battery stations 110. As described above, the number of times of attachment/detachment between each battery and the one or more battery stations 110 may be (i) the number of times of attachment/detachment between each battery and each of the one or more battery stations 110 or (ii) a total value or accumulated value of the number of times of attachment/detachment between each battery and the one or more battery stations 110 while a particular time point is set as an origin.

Further in another embodiment, the battery management system 100 manages the deterioration degree, maintenance plan, or repair/maintenance plan of the electric motorbike 34 or constituent components thereof (for example, connector connecting battery 20 and electric motorbike 34). For example, by managing the number of times of attachment/detachment between the electric motorbike 34 and the battery 20, the battery management system 100 manages the deterioration degree, maintenance plan, or repair/maintenance plan of the connector of the electric motorbike 34. The deterioration degree, maintenance plan, or repair/maintenance plan of the connector of the electric motorbike 34 may be managed by procedures similar to those of the deterioration degree, maintenance plan, or repair/maintenance plan of the connector 350 of the battery station 110.

For example, each of the one or more batteries 20 stores the number of times of attachment/detachment with respect to the one or more electric motorbikes 34. The number of times of attachment/detachment between each battery and the one or more electric motorbikes 34 may be (i) the number of times of attachment/detachment between each battery and each of the one or more electric motorbikes 34 or (ii) a total value or accumulated value of the number of times of attachment/detachment between each battery and the one or more electric motorbikes 34 while a particular time point is set as an origin. For example, when the battery 20 is returned to a particular battery station 110 or when the battery 20 is accommodated in any battery station 110 at a particular timing, the battery station 110 reads out the above-described information indicating the number of times of attachment/detachment, that is stored in the storage device of the battery 20. Further, the battery station 110 transmits the above-described information indicating the number of times of attachment/detachment to the management server 120.

For example, the management server 120 manages, for each electric motorbike 34, the number of times of attachment/detachment with respect to the one or more batteries 20. As described above, the number of times of attachment/detachment between each battery and the one or more electric motorbikes 34 may be (i) the number of times of attachment/detachment between each battery and each of the one or more electric motorbikes 34 or (ii) a total value or accumulated value of the number of times of attachment/detachment between each battery and the one or more electric motorbikes 34 while a particular time point is set as an origin.

Note that each of the one or more batteries 20 may store the number of times of attachment/detachment with respect to the one or more battery stations 110 in addition to the number of times of attachment/detachment with respect to the one or more electric motorbikes 34. As described above, the number of times of attachment/detachment between each battery and the one or more battery stations 110 may be (i) the number of times of attachment/detachment between each battery and each of the one or more battery stations 110 or (ii) a total value or accumulated value of the number of times of attachment/detachment between each battery and the one or more battery stations 110 while a particular time point is set as an origin.

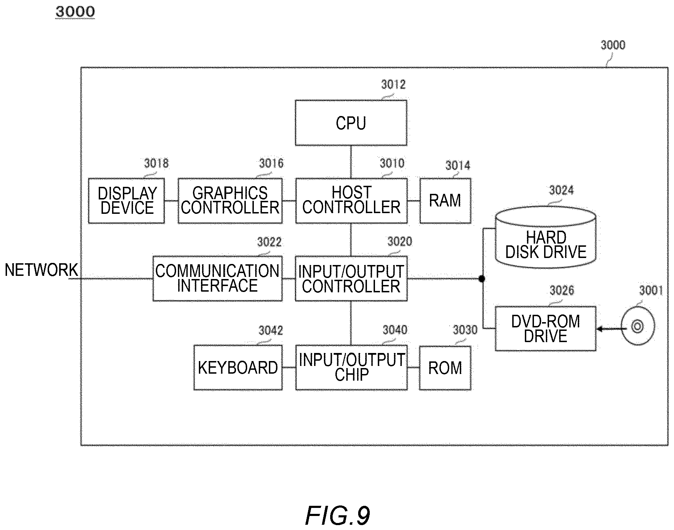

Fig. 9 shows an example of a computer 3000, in which a plurality of aspects of the present invention may be entirely or partially embodied. A part of the battery management system 100 may be realized by the computer 3000.

According to one embodiment, for example, at least a part of the battery station 110 is realized by the computer 3000. At least a part of the station control unit 240 may be realized by the computer 3000, at least a part of the state management unit 246 may be realized by the computer 3000, and at least a part of the slot control unit 370 may be realized by the computer 3000. In another embodiment, for example, at least a part of the management server 120 is realized by the computer 3000. At least a part of the station management unit 510 may be realized by the computer 3000, and at least a part of the station management unit 710 may be realized by the computer 3000.

A program that is installed in the computer 3000 can cause the computer 3000 to perform an operation associated with an apparatus according to the embodiment of the present invention or to function as one or more "units" of the apparatus, or cause the computer 3000 to perform the operation or the one or more units thereof, and/or cause the computer 3000 to perform processes of the embodiment of the present invention or steps thereof. Such a program may be executed by a CPU 3012 to cause the computer 3000 to perform particular operations associated with some or all of the blocks of flowcharts and block diagrams described in the specification.

The computer 3000 according to the present embodiment includes the CPU 3012, a RAM 3014, a GPU 3016, and a display device 3018, which are mutually connected by a host controller 3010. The computer 3000 also includes input/output units such as a communication interface 3022, a hard disk drive 3024, a DVD-ROM drive 3026, and an IC card drive, which are connected to the host controller 3010 via an input/output controller 3020. The computer also includes legacy input/output units such as a ROM 3030 and a keyboard 3042, which are connected to the input/output controller 3020 via an input/output chip 3040.

The CPU 3012 operates according to programs stored in the ROM 3030 and the RAM 3014, thereby controlling each unit. The GPU 3016 acquires image data generated by the CPU 3012 in a frame buffer or the like provided in the RAM 3014 or in itself, so that the image data is displayed on the display device 3018.

The communication interface 3022 communicates with other electronic devices via a network. The hard disk drive 3024 stores the program and data to be used by the CPU 3012 in the computer 3000. The DVD-ROM drive 3026 reads a program or data from the DVD-ROM 3001, and provides the program or data to the hard disk drive 3024 via the RAM 3014. The IC card drive reads the programs and the data from an IC card, and/or writes the programs and the data to the IC card.

The ROM 3030 stores therein a boot program or the like that is performed by the computer 3000 at the time of activation, and/or a program depending on the hardware of the computer 3000. The input/output chip 3040 may also connect various input/output units to the input/output controller 3020 via a parallel port, a serial port, a keyboard port, a mouse port, or the like.

A program is provided by a computer-readable storage medium such as the DVD-ROM 3001 or the IC card. The program is read from a computer-readable storage medium, installed in the hard disk drive 3024, the RAM 3014, or the ROM 3030, which are also examples of the computer-readable storage medium, and executed by the CPU 3012. The information processing described in these programs is read into the computer 3000, resulting in cooperation between a program and the above-described various types of hardware resources. An apparatus or method may be constituted by realizing the operation or processing of information in accordance with the usage of the computer 3000.

For example, when communication is performed between the computer 3000 and an external device, the CPU 3012 may execute a communication program loaded in the RAM 3014 and instruct the communication interface 3022 to perform communication processing based on processing written in the communication program. Under the control of the CPU 3012, the communication interface 3022 reads transmission data stored in a transmission buffer area provided in a recording medium such as the RAM 3014, the hard disk drive 3024, the DVD-ROM 3001, or the IC card, and transmits the read transmission data to the network, or writes reception data received from the network in a reception buffer area or the like provided on the recording medium.

In addition, the CPU 3012 may cause all or a necessary portion of a file or a database to be read into the RAM 3014, the file or the database having been stored in an external recording medium such as the hard disk drive 3024, the DVD-ROM drive 3026 (DVD-ROM 3001), the IC card, etc., and perform various types of processing on the data on the RAM 3014. Next, the CPU 3012 may write back the processed data to the external recording medium.

Various types of information, such as various types of programs, data, tables, and databases, may be stored in the recording medium to undergo information processing. The CPU 3012 may execute various types of processing on the data read from the RAM 3014, which includes various types of operations, information processing, condition judging, conditional branch, unconditional branch, search/replacement of information, etc., as described throughout this disclosure and designated by a command sequence of programs, and writes the result back to the RAM 3014. In addition, the CPU 3012 may search for information in a file, a database, etc., in the recording medium. For example, when a plurality of entries, each having an attribute value of a first attribute associated with an attribute value of a second attribute, are stored in the recording medium, the CPU 3012 may search for an entry whose attribute value of the first attribute matches the condition a designated condition, from among the plurality of entries, and read the attribute value of the second attribute stored in the entry, thereby acquiring the attribute value of the second attribute associated with the first attribute satisfying the predetermined condition.

The programs or software modules described above may be stored in a computer-readable storage medium on the computer 3000 or in the vicinity of the computer 3000. In addition, a recording medium such as a hard disk or a RAM provided in a server system connected to a dedicated communication network or the Internet can be used as the computer-readable storage medium, thereby providing the above-described program to the computer 3000 via the network.

Blocks in the flowcharts and block diagrams of the above-described embodiment may represent steps of processes in which operations are performed or "units" of apparatuses responsible for performing operations. Certain steps and "units" may be implemented by a dedicated circuit, a programmable circuit supplied with computer-readable instructions stored on a computer-readable storage medium, and/or processors supplied with computer-readable instructions stored on a computer-readable storage medium by a processor. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and other logical operations, and a flip-flop, a register, and a memory element, such as a field programmable gate array (FPGA) and a programmable logic array (PLA).

The computer-readable storage medium may include any tangible device capable of storing an instruction executed by an appropriate device, so that the computer-readable storage medium having the instruction stored thereon includes a product including an instruction that may be executed in order to provide means to execute an operation specified by a flowchart or a block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY (registered trademark) disc, a memory stick, an integrated circuit card, and the like.

Computer-readable instructions may include assembler instructions, instruction-set-architecture (ISA) instructions, machine instructions, machine dependent instructions, microcode, firmware instructions, state-setting data, or either source code or object code described in any combination of one or more programming languages, including an object oriented programming language such as Smalltalk (registered trademark), JAVA (registered trademark), and C++, and a conventional procedural programming language such as a 'C' programming language or similar programming languages.

Computer-readable instructions may be provided to a processor of a general-purpose computer, a special-purpose computer, or other programmable data processing apparatus, or to programmable circuit, locally or via a local area network (LAN), wide area network (WAN) such as the Internet, etc., so that the processor of the general-purpose computer, special-purpose computer, or other programmable data processing apparatus, or the programmable circuit executes the computer-readable instructions to create means for performing operations specified in the flowcharts or block diagrams. Examples of the processor include a computer processor, a processing unit, a microprocessor, a digital signal processor, a controller, a microcontroller, and the like.

While the embodiments of the present invention have been described, the technical scope of the invention is not limited to the above-described embodiments. It is apparent to persons skilled in the art that various alterations and improvements can be added to the above-described embodiments. In addition, to the extent that there is no technical contradiction, the matters described for the specific embodiment can be applied to other embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

EXPLANATION OF REFERENCES

| | |
|---|---|
| 10 | communication network |
| 20 | battery |
| 22 | power connector |
| 24 | communication connector |
| 30 | user |
| 32 | communication terminal |
| 34 | electric motorbike |
| 40 | slot |
| 42 | power connector |
| 44 | communication connector |
| 50 | motorbike control unit |
| 100 | battery management system |
| 110 | battery station |
| 112 | slot |
| 120 | management server |
| 220 | distribution board |
| 240 | station control unit |
| 242 | communication control unit |
| 244 | charge/discharge control unit |
| 246 | state management unit |
| 248 | lending management unit |
| 250 | data storage unit |
| 310 | housing |
| 312 | battery accommodation chamber |
| 320 | opening/closing cover |
| 322 | lock member |
| 330 | locking portion |
| 332 | locking member |
| 334 | driving member |
| 340 | battery detection unit |
| 350 | connector |
| 352 | power connector |
| 354 | communication connector |
| 360 | power control circuit |
| 370 | slot control unit |
| 380 | connector |
| 382 | power connector |
| 384 | communication connector |
| 410 | anomaly detection unit |
| 420 | deterioration management unit |
| 422 | number of times of accommodation management unit |
| 424 | number of times of attachment/detachment |

| | |
|---|---|
| | management unit |
| 510 | station management unit |
| 520 | battery management unit |
| 530 | reservation management unit |
| 540 | data storage unit |
| 542 | station information storage unit |
| 544 | battery information storage unit |
| 546 | reservation information storage unit |
| 610 | station information collection unit |
| 620 | maintenance management unit |
| 622 | deterioration estimation unit |
| 624 | repair/maintenance period estimation unit |
| 626 | procurement planning unit |
| 630 | insertion/removal control unit |
| 710 | station management unit |
| 728 | repair/maintenance planning unit |
| 3000 | computer |
| 3001 | DVD-ROM |
| 3010 | host controller |
| 3012 | CPU |
| 3014 | RAM |
| 3016 | GPU |
| 3018 | display device |
| 3020 | input/output controller |
| 3022 | communication interface |
| 3024 | hard disk drive |
| 3026 | DVD-ROM drive |
| 3030 | ROM |
| 3040 | input/output chip |
| 3042 | keyboard |

**Claims**

1. An information acquisition device, comprising:
   an attachment/detachment information acquisition unit configured to acquire, regarding a first terminal provided in a power storage device and a second terminal provided in an electrical power device and is configured to be attachable/detachable to/from the first terminal, a number of times of attachment/detachment between the first terminal and the second terminal.

2. The information acquisition device according to claim 1, wherein

   the electrical power device further includes

   an accommodation portion including the second terminal and configured to accommodate the power storage device, and
   a counting unit configured to count a number of times of accommodation of the power storage device in the accommodation portion, and

   the attachment/detachment information acquisition unit is configured to acquire the number of times of attachment/detachment based on the number of times of accommodation counted by the counting unit.

3. The information acquisition device according to claim 2, wherein

the accommodation portion is configured such that the power storage device is insertable/removable into/from the accommodation portion, and

the counting unit includes an insertion detection unit configured to detect that the power storage device has been inserted into the accommodation portion.

4. The information acquisition device according to any one of claims 1 to 3, wherein the electrical power device or a remote device configured to be communicable with the electrical power device includes a deterioration information acquisition unit configured to acquire deterioration information indicating a deterioration degree of the second terminal, based on the number of times of attachment/detachment acquired by the attachment/detachment information acquisition unit.

5. The information acquisition device according to claim 4, wherein the electrical power device or the remote device further includes a repair/maintenance information acquisition unit configured to acquire, based on the deterioration information acquired by the deterioration information acquisition unit, repair/maintenance information including at least one of (i) information indicating an arrival of a repair/maintenance period of the second terminal or (ii) information indicating a repair/maintenance prediction period which is a period in which a repair/maintenance of the second terminal is predicted to be performed.

6. The information acquisition device according to claim 5, wherein the electrical power device or the remote device further includes a first output unit configured to output information to be utilized for a manufacturing plan or a distribution plan of the second terminal, based on at least one of (i) an arrival of the repair/maintenance period being indicated by the repair/maintenance information acquired by the repair/maintenance information acquisition unit or (ii) the repair/maintenance prediction period indicated by the repair/maintenance information acquired by the repair/maintenance information acquisition unit.

7. The information acquisition device according to claim 5 or 6, wherein the electrical power device or the remote device further includes a second output unit configured to output information to be utilized for a maintenance plan or a repair/maintenance plan of the second terminal, based on at least one of (i) an arrival of the repair/maintenance period being indicated by the repair/maintenance information acquired by the repair/maintenance information acquisition unit or (ii) the repair/maintenance prediction period indicated by the repair/maintenance information acquired by the repair/maintenance information acquisition unit.

8. The information acquisition device according to any one of claims 4 to 7, wherein

the electrical power device is a storing device configured to be capable of storing a plurality of the power storage devices, and the electrical power device includes a selection unit configured to select, based on the deterioration information acquired by the deterioration information acquisition unit, the power storage device to be provided to a user out of the plurality of the power storage devices.

9. The information acquisition device according to claim 8, wherein

the electrical power device includes a plurality of the second terminals respectively corresponding to the plurality of the power storage devices,

the deterioration information acquisition unit is configured to acquire the deterioration information related to each of the plurality of the second terminals, and

the selection unit is configured to select the power storage device to be provided to the user such that the power storage device corresponding to the second terminal having a smaller deterioration degree is provided to the user more preferentially than the power storage device corresponding to the second terminal having a larger deterioration degree.

10. The information acquisition device according to any one of claims 1 to 9, wherein the attachment/detachment information acquisition unit is configured to acquire, regarding a third terminal provided in another electrical power device different from the electrical power device and is configured to be attachable/detachable to/from the first terminal and the first terminal, another number of times of attachment/detachment which is a number of times of attachment/detachment between the first terminal and the third terminal.

11. The information acquisition device according to claim 10, wherein
the electrical power device, the another electrical power device, or a remote device configured to be communicable with the electrical power device or the another electrical power device includes
a deterioration information acquisition unit configured to acquire deterioration information indicating a deterioration degree of the first terminal, based on the number of times of attachment/detachment and the another number of times of attachment/detachment acquired by the attachment/detachment information acquisition unit.

12. The information acquisition device according to any one of claims 1 to 9, wherein

the power storage device is attached/detached alternately between another electrical power device different from the electrical power device and the electrical power device, and
the electrical power device or a remote device configured to be communicable with the electrical power device includes
a deterioration information acquisition unit configured to acquire deterioration information indicating a deterioration degree of the first terminal, based on a value obtained by doubling the number of times of attachment/detachment acquired by the attachment/detachment information acquisition unit.

13. An information processing system, comprising:

the information acquisition device according to any one of claims 1 to 3; and
the electrical power device or a remote device configured to be communicable with the electrical power device.

14. An information processing system, comprising:

the information acquisition device according to any one of claims 4 to 9; and
an estimation unit configured to estimate a deterioration degree of the second terminal.

15. An estimation device, comprising
an estimation unit configured to estimate, regarding a first terminal provided in a power storage device and a second terminal provided in an electrical power device and is configured to be attachable/detachable to/from the first terminal, a deterioration degree of at least one of the first terminal or the second terminal.

16. The estimation device according to claim 15, wherein

the electrical power device includes an attachment/detachment information acquisition unit configured to acquire a number of times of attachment/detachment between the first terminal and the second terminal, and
the estimation unit is configured to estimate the deterioration degree based on the number of times of attachment/detachment acquired by the attachment/detachment information acquisition unit.

17. The estimation device according to claim 16, wherein

the electrical power device further includes

an accommodation portion including the second terminal and configured to accommodate the power storage device, and
a counting unit configured to count a number of times of accommodation of the power storage device in the accommodation portion, and

the attachment/detachment information acquisition unit is configured to acquire the number of times of attachment/detachment based on the number of times of accommodation counted by the counting unit.

18. The estimation device according to claim 17, wherein

the accommodation portion is configured such that the power storage device is insertable/removable into/from the accommodation portion, and
the counting unit includes an insertion detection unit configured to detect that the power storage device has been inserted into the accommodation portion.

19. A storing device configured to be capable of storing a plurality of power storage devices, comprising:

a plurality of second terminals respectively corresponding to a plurality of first terminals provided in each of a plurality of the power storage devices, each of the plurality of the second terminals being configured to be attachable/detachable to/from a corresponding one of a plurality of the first terminals;
a deterioration information acquisition unit configured to acquire deterioration information indicating a deterioration degree of each of the plurality of the second terminals; and
a selection unit configured to select, based on the deterioration information acquired by the deterioration information acquisition unit, the power storage device to be provided to a user out of the plurality of the power storage devices.

20. The storing device according to claim 19, wherein the selection unit is configured to select the power storage device to be provided to the user such that the power storage device corresponding to the second terminal having a smaller deterioration degree is provided to the user more preferentially than the power storage device corresponding to the second terminal having a larger deterioration degree.

21. The storing device according to claim 19 or 20, further comprising

an attachment/detachment information acquisition unit configured to acquire a number of times of attachment/detachment between each of the plurality of the second terminals and the corresponding one of the plurality of the first terminals,
wherein the deterioration information acquisition unit is configured to determine or estimate the deterioration degree of each of the plurality of the second terminals, based on the number of times of attachment/detachment acquired by the attachment/detachment information acquisition unit.

22. An information acquisition method, comprising acquiring, regarding a first terminal provided in a power storage device and a second terminal provided in an electrical power device and is configured to be attachable/detachable to/from the first terminal, a number of times of attachment/detachment between the first terminal and the second terminal.

23. An estimation method, comprising estimating, regarding a first terminal provided in a power storage device and a second terminal provided in an electrical power device and is configured to be attachable/detachable to/from the first terminal, a deterioration degree of at least one of the first terminal or the second terminal.

24. A control method for a storing device including a plurality of second terminals respectively corresponding to a plurality of first terminals provided in each of a plurality of power storage devices, each of the plurality of the second terminals being configured to be attachable/detachable to/from a corresponding one of the plurality of the first terminals, the control method comprising:

acquiring deterioration information indicating a deterioration degree of each of the plurality of the second terminals; and
selecting, based on the deterioration information acquired in the acquiring of the deterioration information, the power storage device to be provided to a user out of the plurality of the power storage devices.

25. A program that causes a computer to function as the information acquisition device according to any one of claims 1 to 12.

26. A program that causes a computer to function as the estimation device according to any one of claims 15 to 18.

27. A program that causes a computer to function as the storing device according to any one of claims 19 to 21.

28. A computer-readable recording medium having recorded thereon the program according to any one of claims 25 to 27.

100

120

30  32

①RESERVE

10

34

20

22

42

50

24

40

110

③RETURN

②LEND

112

44

*FIG.1*

110

BATTERY STATION

240

STATION CONTROL UNIT

SLOT

112

112

SLOT

220

DISTRIBUTION
BOARD

COMMUNICATION
CONTROL UNIT 242

CHARGE/DISCHARGE
CONTROL UNIT 244

STATE
MANAGEMENT UNIT 246

LENDING
MANAGEMENT UNIT 248

DATA
STORAGE UNIT 250

FIG.2

*FIG.3*

<u>246</u>

```
┌─────────────────────────────────────────────┐
│ STATE MANAGEMENT UNIT                        │
│                                              │
│   ┌──────────────────┐  410                  │
│   │   ANOMALY        │                       │
│   │ DETECTION UNIT   │              420      │
│   └──────────────────┘                       │
│   ┌──────────────────────────────────────┐  │
│   │ DETERIORATION                        │  │
│   │ MANAGEMENT UNIT                      │  │
│   │  ┌────────────────────────┐  422     │  │
│   │  │ NUMBER OF TIMES OF      │         │  │
│   │  │ ACCOMMODATION          │         │  │
│   │  │ MANAGEMENT UNIT        │         │  │
│   │  └────────────────────────┘         │  │
│   │  ┌────────────────────────┐  424     │  │
│   │  │ NUMBER OF TIMES OF      │         │  │
│   │  │ ATTACHMENT/DETACHMENT  │         │  │
│   │  │ MANAGEMENT UNIT        │         │  │
│   │  └────────────────────────┘         │  │
│   └──────────────────────────────────────┘  │
└─────────────────────────────────────────────┘
```

*FIG.4*

*FIG.5*

510

```
STATION MANAGEMENT UNIT

    ┌─────────────────────────────┐
    │   STATION INFORMATION       │ ～ 610
    │   COLLECTION UNIT           │
    └─────────────────────────────┘

    ┌─────────────────────────────┐
    │ MAINTENANCE MANAGEMENT UNIT │  ～ 620
    │  ┌───────────────────────┐  │
    │  │   DETERIORATION       │～622
    │  │   ESTIMATION UNIT     │  │
    │  └───────────────────────┘  │
    │  ┌───────────────────────┐  │
    │  │ REPAIR/MAINTENANCE    │～624
    │  │ PERIOD ESTIMATION UNIT│  │
    │  └───────────────────────┘  │
    │  ┌───────────────────────┐  │
    │  │   PROCUREMENT         │～626
    │  │   PLANNING UNIT       │  │
    │  └───────────────────────┘  │
    └─────────────────────────────┘

    ┌─────────────────────────────┐
    │   INSERTION/REMOVAL         │ ～ 630
    │   CONTROL UNIT              │
    └─────────────────────────────┘
```

*FIG.6*

710

| STATION MANAGEMENT UNIT |
| --- |
| STATION INFORMATION COLLECTION UNIT ~610 |
| MAINTENANCE MANAGEMENT UNIT ~620 |
| DETERIORATION ESTIMATION UNIT 622 |
| REPAIR/MAINTENANCE PERIOD ESTIMATION UNIT 624 |
| REPAIR/MAINTENANCE PLANNING UNIT 728 |
| INSERTION/REMOVAL CONTROL UNIT ~630 |

*FIG.7*

BATTERY STATION 110

COUNT NUMBER OF
TIMES OF INSERTION — S822

GENERATE ATTACHMENT/
DETACHMENT INFORMATION OR
DETERIORATION INFORMATION — S824

TRANSMIT ATTACHMENT/
DETACHMENT INFORMATION OR
DETERIORATION INFORMATION

S826

END

MANAGEMENT
SERVER 120

S832

ESTIMATE DETERIORATION
DEGREE

ESTIMATE REPAIR/
MAINTENANCE PERIOD — S834

GENERATE AND OUTPUT
COMPONENT PROCUREMENT PLAN — S836

GENERATE AND OUTPUT
REPAIR/MAINTENANCE PLAN — S838

END

*FIG.8*

3000

*FIG.9*

## INTERNATIONAL SEARCH REPORT

International application No.

PCT/JP2021/020572

### A. CLASSIFICATION OF SUBJECT MATTER

Int.Cl. H02J13/00(2006.01)i, G06Q50/10(2012.01)i, H02J7/00(2006.01)i, B60L58/16(2019.01)i, B60L53/30(2019.01)i, B60L53/68(2019.01)i, B60L53/80(2019.01)i
FI: H02J7/00Y, H02J13/00301D, B60L53/80, B60L53/30, B60L53/68, B60L58/16, G06Q50/10

According to International Patent Classification (IPC) or to both national classification and IPC

### B. FIELDS SEARCHED

Minimum documentation searched (classification system followed by classification symbols)
Int.Cl. H02J13/00, G06Q50/10, H02J7/00, B60L58/16, B60L53/30, B60L53/68, B60L53/80

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br><br>A | JP 2017-225342 A (RESC LTD.) 21 December 2017 (2017-12-21), paragraphs [0033], [0034], [0038], [0042], [0047], [0048], [0050], [0053]-[0057], [0062], [0063], fig. 1-4 | 1-3, 13, 22<br>4, 8-12, 14-21, 23-28<br>5-7 |
| Y | JP 2006-345670 A (DENSO WAVE INC.) 21 December 2006 (200-12-21), paragraph [0019], fig. 1 | 4, 8-12, 14-21, 23-28 |
| Y | JP 2013-207923 A (SUMITOMO NACCO MATERIALS HANDLING CO., LTD.) 07 October 2013 (2013-10-07), paragraph [0089], fig. 1 | 8-12, 14, 19-21, 24-25, 27-28 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 July 2021 | 17 August 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/020572

| JP 2017-225342 A | 21 December 2017 | CN 105493378 A paragraphs [0086], [0087], [0095], [0099], [0105]-[0110], [0114]-[0120], [0125], [0126], fig. 1-4 |
| JP 2006-345670 A | 21 December 2006 | (Family: none) |
| JP 2013-207923 A | 07 October 2013 | (Family: none) |

Form PCT/ISA/210 (patent family annex) (January 2015)

**EP 4 160 869 A1**

## REFERENCES CITED IN THE DESCRIPTION

**Patent documents cited in the description**

- JP 2018160073 A

- JP H11259709 B